# EUROPEAN PATENT APPLICATION

(11) **EP 4 220 848 A1**
(43) Date of publication of application: **02.08.2023**
(21) Application number: 23153205.2
(22) Date of filing: 25.01.2023
(51) Int. Cl.: H01M 50/538, H01M 4/66, H01M 4/13, H01M 10/04, H01M 10/0525, H01M 10/0587

(54) **ELECTROCHEMICAL APPARATUS AND ELECTRONIC DEVICE**

(30) Priority: 28.01.2022 CN 202210107566
(71) Applicant: Ningde Amperex Technology Ltd., Ningde City, Fujian 352100 (CN)
(72) Inventor: JIA, You, Ningde City, Fujian Province, People's Republic of China, 352100 (CN)
(74) Representative: Icosa

(57) **Abstract**

An electrochemical apparatus (1) includes a housing (100), an electrode assembly (200), a first conductive member (300), and a second conductive member (400). The electrode assembly (200) includes a first electrode plate (210), a second electrode plate (220), and a separator (230). The first electrode plate (210) includes a first current collector (211), a first active material layer (212), and a second active material layer (213). The first current collector (211) includes a first conductive layer (2112), a first insulation layer (2111), and a second conductive layer (2113) that are stacked. The first conductive member (300) is connected to the first conductive layer (2112), and the second conductive member (400) is connected to the second conductive layer (2113), where the first conductive member (300) is electrically connected to the second conductive member (400).

## Description

### TECHNICAL FIELD

Embodiments of this application relate to the technical field of electrochemical apparatus, and in particular, to an electrochemical apparatus and an electronic device.

### BACKGROUND

An electrochemical apparatus is an apparatus that converts external energy into electric energy and stores the electric energy inside so as to supply power to an external device (for example, a portable electronic device) as needed. At present, electrochemical apparatuses are widely used in electronic devices such as mobile phones, tablets, and notebook computers.

An electrochemical apparatus includes, on its electrode plates, current collectors and active material layers disposed on the current collectors. At present, some electrochemical apparatuses in the market use composite current collectors to make electrode plates. Specifically, the composite current collector includes an insulation layer in the middle, and conductive layers at two sides of the insulation layer; and a tab of the electrochemical apparatus is located in one of the conductive layers.

As the two conductive layers are provided with the insulation layer in between, the two conductive layers are not conductively connected to each other. Consequently, it is difficult for electrons to flow between the tab and a conductive layer away from the tab.

### SUMMARY

Embodiments of this application are intended to provide an electrochemical apparatus and an electronic device, to relieve a current situation of non-conduction between two conductive layers in a composite current collector.

According to a first aspect, an embodiment of this application provides an electrochemical apparatus to resolve the existing technical problem. The electrochemical apparatus includes a housing and a wound electrode assembly accommodated in the housing, the electrode assembly including a first electrode plate, a second electrode plate, and a separator disposed between the first electrode plate and the second electrode plate. The first electrode plate includes a first current collector, a first active material layer, and a second active material layer. The first current collector includes a first conductive layer, a first insulation layer, and a second conductive layer that are stacked, where the first insulation layer is disposed between the first conductive layer and the second conductive layer, the first conductive layer has a first surface facing away from the first insulation layer, and the second conductive layer has a second surface facing away from the first insulation layer. Edge of the first current collector includes a first side extending along a first direction and a second side adjoining the first side, where the second side has a greater length than the first side. The first active material layer is disposed on the first surface, and the second active material layer is disposed on the second surface.

The electrochemical apparatus further includes a first conductive member and a second conductive member. The first conductive member is connected to the first conductive layer, and the second conductive member is connected to the second conductive layer, where the first conductive member is electrically connected to the second conductive member. In an extending direction of the second side, the second side has a length L₁₁, and the first conductive member is apart from the second conductive member by a distance L₁₂, where L₁₂/L₁₁ ≥ 1/5.

In the electrochemical apparatus provided in the embodiment of this application, the first conductive member is connected to the first conductive layer, the second conductive member is connected to the second conductive layer, and the first conductive member and the second conductive member are electrically connected to each other. Therefore, electronic conduction is achieved between the first conductive layer and the second conductive layer through the first conductive member and the second conductive member. In other words, the electrochemical apparatus provided in the embodiment of this application can relieve the current situation of non-conduction between two conductive layers in a composite current collector. On this basis, whether an additional tab is provided on the first current collector or at least one of the first conductive member and the second conductive member is used as the tab of the electrochemical apparatus, electrons in the first conductive layer and the second conductive layer can flow to the tab, or electrons in the tab can flow to the first conductive layer and the second conductive layer.

It should be noted that if the first conductive member is too close to the second conductive member, for example, the two conductive members are disposed close together at a same first connecting portion, the electrode assembly will have a large thickness change at the periphery of the first conductive member (or the second conductive member), which in turn causes parts of the first electrode plate and the second electrode plate close to the first conductive member (or the second conductive member) to experience obvious deformation. This will increase a risk of lithium precipitation of the first electrode plate and the second electrode plate. However, setting of L₁₂/L₁₁ ≥ 1/5 facilitates a large distance between the first conductive member and the second conductive member, to prevent the two conductive members from being disposed close together at a same first connecting portion. In other words, the first conductive member and the second conductive member can be disposed at different first connecting portions, or at two ends of a same connecting portion, to reduce the risk of lithium precipitation. In addition, a current density at a position of the first conductive member/second conductive member is high, which tends to cause expansion and contraction of the active material layer, and in turn leads to deformation of the first conductive layer, the second conductive layer, and the first insulation layer. If the first conductive member and the second conductive member are too close to each other, deformation occurs at small intervals in length on the entire first electrode plate during charging and discharging, which causes a concentrated stress of the first electrode plate, and therefore makes the first electrode plate prone to deformation. This can affect electrochemical performance and service life. The setting of L₁₂/L₁₁ ≥ 1/5 can relieve such issue to some extent.

In some embodiments, edge of the first current collector further includes a third side opposite the first side. The first active material layer has a first edge and a second edge, where the first edge and the second edge are located at the first current collector, and the second active material layer has a third edge and a fourth edge, where the third edge and the fourth edge are located at the first current collector. In the extending direction of the second side, the first edge and the second edge are located at two ends of the first active material layer respectively, the first edge is closer to the first side than the second edge, the first edge is at a first distance from the first side, and the second edge is at a second distance from the third side. In the extending direction of the second side, the third edge and the fourth edge are located at two ends of the second active material layer respectively, the third edge is closer to the first side than the fourth edge, the third edge is at a third distance from the first side, the fourth edge is at a fourth distance from the third side, a larger value of the first distance and the third distance is L₁₄, and a larger value of the second distance and the fourth distance is L₁₅; and in the extending direction of the second side, the first conductive member is closer to the first side than the second conductive member, the first conductive member is at a distance L₁₆ from the first side, and the second conductive member is at a distance L₁₇ from the third side, where 1/5 ≤ (L₁₆ - L₁₄)/(L₁₁ - L₁₄ - L₁₅) ≤ 2/5 and/or 1/5 ≤ (L₁₇ - L₁₅)/(L₁₁ - L₁₄ - L₁₅) ≤ 2/5.

As the first conductive member and the second conductive member are structures that export electrons of a corresponding active material layer, when the electrochemical apparatus is charged, a current density of the first electrode plate at positions of the first conductive member and the second conductive member is the highest. If the first conductive member and the second conductive member are too close to each other, lithium ions deintercalated from the second electrode plate move at an extremely fast rate (that is, a rate of intercalating lithium ions into the first electrode plate) in the vicinity of the first conductive member and the second conductive member, which leads to a tendency of lithium precipitation at the periphery of the first electrode plate and the second electrode plate. A distance between the first conductive member and an end of a first area layer (or a second area layer) closer to the first side accounts for about 1/3 of a length of the first area layer, and a distance between the second conductive member and an end of the first area layer closer to the third side accounts for about 1/3 of the length of the first area layer; that is, the first conductive member and the second conductive member each are near a three-equal-point of the first area layer in the extending direction of the second side. Therefore, when the electrochemical apparatus is charged, lithium ions that are deintercalated from the second electrode plate and move toward the first electrode plate still move at a fast rate at the periphery of the first conductive member and the second conductive member. However, compared with the foregoing manner, the distance between the first conductive member and the second conductive member is about 1/3 the length of the first area layer in the extending direction of the second side. Such arrangement can reduce the risk of lithium precipitation at positions at which the first conductive member and the second conductive member are disposed on the first electrode plate. Besides, such arrangement also ensures a more uniform lithium ion deintercalation or intercalation rate at the part of the first area layer (or the second area layer) between the first edge and the first conductive member, the part of the first area layer (or the second area layer) between the first conductive member and the second conductive member, and the part of the first area layer (or the second area layer) between the second edge and the second conductive member.

In some embodiments, one end of at least one of the first conductive member and the second conductive member extends out of the housing to form a first tab of the electrochemical apparatus; or the electrochemical apparatus further includes a first tab, where at least one of the first conductive member and the second conductive member is connected to one end of the first tab, and the other end of the first tab extends out of the housing. In this way, electrons of the first electrode plate can be exported to the outside through the first conductive member and the second conductive member.

In some embodiments, the first electrode plate is an anode plate, and the second electrode plate is a cathode plate.

In some embodiments, the second electrode plate includes a second current collector, a third active material layer, and a fourth active material layer. The second current collector includes a third conductive layer, a second insulation layer, and a fourth conductive layer that are stacked, where the second insulation layer is disposed between the third conductive layer and the fourth conductive layer, the third active material layer is disposed on a surface of the third conductive layer facing away from the second insulation layer, and the fourth active material layer is disposed on a surface of the fourth conductive layer facing away from the second insulation layer; and the electrochemical apparatus further includes a third conductive member and a fourth conductive member, where the third conductive member is connected to the third conductive layer, and the fourth conductive member is connected to the fourth conductive layer.

In this way, electronic conduction is achieved between the third conductive layer and the fourth conductive layer of the second electrode plate through the third conductive member and the fourth conductive member. In other words, the electrochemical apparatus provided in the embodiment of this application can relieve the current situation of non-conduction between two conductive layers in a composite current collector.

In some embodiments, the first electrode plate is wound with respect to the first side and includes a plurality of first connecting portions and a plurality of first bending portions, the first connecting portions, as viewed from the first direction, extend along a second direction and are arranged along a third direction, and the first bending portion connects two neighboring first connecting portions in a winding direction of the electrode assembly, where the first direction, the second direction, and the third direction are perpendicular to each other. The second current collector includes at the periphery a fifth side extending along the first direction and a sixth side adjoining the fifth side, where the sixth side has a greater length than the fifth side, the second electrode plate is wound with respect to the fifth side and includes a plurality of second connecting portions and a plurality of second bending portions, the second connecting portions, as viewed from the first direction, extend along the second direction and are arranged along the third direction, and the second bending portion connects two neighboring second connecting portions in the winding direction.

In some embodiments, one of the plurality of first connecting portions is defined as a first preset connecting portion, and one end of the first conductive member is mounted to the first preset connecting portion. One of the plurality of second connecting portions is defined as a second preset connecting portion, in the third direction, the second preset connecting portion is provided at a side of the first conductive member facing away from the first preset connecting portion, and among the plurality of first connecting portions and the plurality of second connecting portions, the second preset connecting portion is adjacent to the first preset connecting portion. The fourth active material layer is provided with a fourth groove at a portion located at the second preset connecting portion, the portion being arranged at a side of the second current collector facing away from the first conductive member, where the fourth groove runs through a surface of the fourth active material layer facing away from the second current collector, and projections of the fourth groove and the first conductive member in the third direction at least partially overlap.

The foregoing arrangement is intended to make the first conductive member correspond to a position of the fourth groove, thereby facilitating the fourth groove to accommodate a protruding portion of the first conductive member (or welding burrs on the first conductive member) relative to a surface of the first active material layer. This can reduce a risk of damage to an interface of the second electrode plate caused by the protruding portion being pressed against the second electrode plate to some extent.

In some embodiments, the third active material layer is provided with a third groove at a portion located at the second preset connecting portion, where the third groove runs through a surface of the third active material layer facing away from the second current collector, and projections of the third groove and the fourth groove in the third direction at least partially overlap. In an extending direction of the first side, one end of the third conductive member is mounted to the third groove and the other end thereof extends out of the second electrode plate. An end of the first conductive member extending out of the first electrode plate and the end of the third conductive member extending out of the second electrode plate are located on two sides of the electrode assembly in the first direction respectively.

In some embodiments, the fourth groove runs through the fourth active material layer in the first direction; and/or the third groove runs through the third active material layer in the first direction. With such arrangement, the third conductive member and the first conductive member can extend out of the electrode assembly in the opposite direction.

In some embodiments, at least part of the first conductive member extends into the fourth groove. Such arrangement is intended to enable the fourth groove to accommodate the protruding portion of the first conductive member (or welding burrs on the first conductive member) relative to the surface of the first active material layer. This can reduce a risk of damage to an interface of the second electrode plate caused by the protruding portion being pressed against the second electrode plate to some extent.

In some embodiments, a first insulator is further included. The first insulator is fastened to a side of the first preset connecting portion provided with the first conductive member, separating the first conductive member from the separator adjacent to the first insulator. In this way, a risk of short circuiting between the first electrode plate and the second electrode plate due to the welding burrs on the first conductive member piercing the separator is reduced.

In some embodiments, two ends of the first insulator are located between two ends of the fourth groove in the second direction.

If a width of the fourth groove in the second direction is less than a width of the first insulator, when the electrochemical apparatus is charged, lithium ions in active materials located at the periphery of the fourth groove and opposite the first insulator will still be deintercalated from the second electrode plate and move toward the first electrode plate. Because a portion of the active material of the first electrode plate is covered by the first insulator, some lithium ions deintercalated from the second electrode plate cannot be intercalated in the first electrode but are precipitated on the surface of the first electrode in an elemental form, causing lithium precipitation. This may further cause some active materials in the first electrode plate to fail to deintercalate from the first electrode plate during discharging. In this embodiment, the arrangement of the two ends of the first insulator being located between the two ends of the fourth groove in the second direction can relieve the foregoing deficiency to some extent.

In some embodiments, one of the plurality of first connecting portions is defined as a third preset connecting portion, and one end of the second conductive member is mounted to the thrid preset connecting portion. One of the plurality of second connecting portions is defined as a fourth preset connecting portion, and one end of the fourth conductive member is mounted to the fourth preset connecting portion. Among the plurality of first connecting portions and the plurality of second connecting portions, the first preset connecting portion is adjacent to the third preset connecting portion, the fourth preset connecting portion is adjacent to the first preset connecting portion, and the second preset connecting portion is adjacent to the fourth preset connecting portion.

In some embodiments, the first active material layer is provided with a first groove at a portion located at the first preset connecting portion, and one end of the first conductive member is mounted to the first groove. The second active material layer is provided with a second groove at a portion located at the first preset connecting portion, and projections of the second groove and the first groove in the third direction at least partially overlap. The third active material layer is provided with a seventh groove at a portion located at the fourth preset connecting portion, and projections of the seventh groove and the second groove in the third direction at least partially overlap. The fourth active material layer is provided with an eighth groove at a portion located at the fourth preset connecting portion, and projections of the eighth groove and the seventh groove in the third direction at least partially overlap. The electrochemical apparatus further includes a second insulator and a sixth insulator, where the second insulator is fastened to a side of the first preset connecting portion provided with the second groove and covers at least part of the second groove, and the sixth insulator is fastened to a side of the fourth preset connecting portion provided with the seventh groove and covers at least part of the seventh groove; and two ends of the second insulator are located between two ends of the sixth insulator in the second direction.

If a width of the sixth insulator in the second direction is less than a width of the second insulator, when the electrochemical apparatus is charged, lithium ions in active materials located at the periphery of the sixth insulator and opposite to the position 0 of the second insulator will still be deintercalated from the second electrode plate and move toward the first electrode plate. Because a portion of the active material of the first electrode plate is covered by the second insulator, some lithium ions deintercalated from the second electrode plate cannot be intercalated in the first electrode but are precipitated on the surface of the first electrode in an elemental form, causing lithium precipitation. This may further cause some active materials in the first electrode plate to fail to deintercalate from the first electrode plate during discharging. In this embodiment, the arrangement of the two ends of the second insulator being located between the two ends of the sixth insulator in the second direction can relieve the foregoing deficiency to some extent.

In some embodiments, the third side is located at the first connecting portion, the first connecting portion having the third side is outward of the plurality of second connecting portions in the third direction, one end of the first conductive member is fastened to the first connecting portion having the third side, and in the third direction, the first conductive member is disposed at a side of the connected first connecting portion facing away from the first side. The electrode assembly includes a fifth surface and a sixth surface spaced apart in the third direction, where the fifth surface is closer to the first conductive member than the sixth surface in the third direction. The electrochemical apparatus further includes a bonding member, where the bonding member is bonded to the fifth surface and secured to the housing, and projections of the bonding member and the first conductive member in the third direction at least partially overlap.

In this way, the bonding member, in addition to fastening the electrode assembly, can also separate the first conductive member from the housing, so as to prevent the welding burrs on the first conductive member piercing the housing.

In some embodiments, the third conductive member is fastened to the second connecting portion adjacent to the first conductive member in the third direction and is located, in the third direction, at a side of the connected second connecting portion facing away from the first side. The third side is located between the first conductive member and the second conductive member in the second direction; and projections of the bonding member and the third conductive member in the third direction at least partially overlap.

In this way, the bonding member can substantially separate welding burrs of the third conductive member from the housing.

In some embodiments, the second conductive layer is provided with, on a surface, a third area with the second active material layer disposed and a fourth area without the second active material layer, where the fourth area includes a second head end and a second tail end provided opposite each other in the winding direction, and the second head end is located at the third side. The second current collector includes at the periphery a seventh side provided opposite the fifth side, and the third conductive layer is provided with, on a surface, a fifth area with the third active material layer disposed and a sixth area without the third active material layer, where the sixth area includes a third head end and a third tail end provided opposite each other in the winding direction, the third head end is located at the seventh side, and in the third direction, the third tail end is located at a side of the second tail end closer to the first side. The electrochemical apparatus further includes an insulating material layer disposed in the sixth area.

In this way, the insulating material layer can separate an exposed part of the second current collector from an exposed part of the first current collector, thereby reducing a risk of contact between the fourth area and the sixth area. In addition, the insulating material layer has more reliable strength when connecting to the second current collector than the first insulation adhesive.

In some embodiments, the insulating material layer includes a ceramic material.

In some embodiments, materials of the first insulation layer include at least one of polyethylene terephthalate, polybutylene terephthalate, polyethylene naphthalate, polyether-ether-ketone, polyimide, polyamide, polyethylene glycol, polyamideimide, polycarbonate, cyclic polyolefin, polyphenylene sulfide, polyvinyl acetate, polytetrafluoroethylene, polymethylene naphthalene, polyvinylidene fluoride, polyethylene naphthalate, polypropylene carbonate, poly(vinylidene fluoride-hexafluoropropylene), poly(vinylidene fluoride-co-chlorotrifluoroethylene), silicone, vinylon, polypropylene, polyethylene, polyvinyl chloride, polystyrene, polyether nitrile, polyurethane, polyphenylene ether, polyester, polysulfone, and their derivatives, sodium carboxymethyl cellulose, styrene-butadiene rubber, fluorinated rubber, polyvinyl alcohol, or polyvinylidene fluoride. Materials of the first conductive layer and/or the second conductive layer include at least one of copper, copper alloy, nickel, and nickel alloy. Thickness of the first insulation layer ranges from 1 micron to 40 microns. Thickness of the first conductive layer and/or the second conductive layer ranges from 1 micron to 10 microns.

According to a second aspect, an embodiment of this application provides an electronic device to resolve an existing technical problem. The electronic device includes the electrochemical apparatus described in any one of the foregoing embodiments.

### BRIEF DESCRIPTION OF DRAWINGS

One or more embodiments are used as examples for description by using corresponding accompanying drawings. These example descriptions impose no limitation on the embodiments. Elements with a same reference sign in the accompanying drawings represent similar elements. Unless otherwise stated, the figures in the accompanying drawings impose no limitation on a scale.
FIG. 1 is a schematic diagram of an electrochemical apparatus according to an embodiment of this application;
FIG. 2 is a schematic diagram of the electrochemical apparatus in FIG. 1 with a housing hidden;
FIG. 3 is a schematic cross-sectional diagram, along line A-A, of the electrochemical apparatus in FIG. 1 with a housing hidden;
FIG. 4 is a schematic diagram of a first electrode plate in FIG. 3 in an unfolded state as viewed from a first direction;
FIG. 5 is a schematic diagram of a first electrode plate as viewed from the top of FIG. 4;
FIG. 6 is a schematic diagram of a first electrode plate as viewed from the bottom of FIG. 4;
FIG. 7 is a schematic diagram of a second electrode plate in FIG. 3 in an unfolded state as viewed from a first direction;
FIG. 8 is a schematic diagram of a second electrode plate as viewed from the top of FIG. 7;
FIG. 9 is a schematic diagram of a second electrode plate as viewed from the bottom of FIG. 7;
FIG. 10 is a locally enlarged schematic diagram of position B in FIG. 3;
FIG. 11 is a schematic diagram of a first electrode plate, a first conductive member, and a second conductive member in a connected state in one direction in some embodiments of this application;
FIG. 12 is a schematic diagram of a first electrode plate, a first conductive member, and a second conductive member in a connected state in another direction in some embodiments of this application;
FIG. 13 is a schematic diagram of a first electrode plate, a first conductive member, and a second conductive member in a connected state in one direction in other embodiments of this application;
FIG. 14 is a schematic diagram of a first electrode plate, a first conductive member, and a second conductive member in a connected state in another direction in other embodiments of this application;
FIG. 15 is a schematic cross-sectional diagram of an electrochemical apparatus according to another embodiment of this application;
FIG. 16 is a schematic diagram of a first electrode plate in FIG. 15 in an unfolded state;
FIG. 17 is a schematic diagram of a second electrode plate in FIG. 15 in an unfolded state;
FIG. 18 is a schematic cross-sectional diagram of an electrochemical apparatus according to still another embodiment of this application; and
FIG. 19 is a schematic diagram of an electronic device according to an embodiment of this application.

In the drawings:
1. electrochemical apparatus;
100. housing;
200. electrode assembly;
210. first electrode plate; 211. first current collector; 212. first active material layer; 213. second active material layer; 214. first connecting portion; 215. first bending portion; 2111. first insulation layer; 2112. first conductive layer; 2113. second conductive layer; 21121. first surface; 21131. second surface; 2121. first edge; 2122. second edge; 2131. third edge; 2132. fourth edge; 2101. first side; 2102. second side; 2103. third side; 2104. fourth side; 2105. first groove; 2106. second groove; 2107. fifth groove; 2108. sixth groove;
220. second electrode plate; 221. second current collector; 222. third active material layer; 223. fourth active material layer; 224. second connecting portion; 225. second bending portion; 2211. second insulation layer; 2212. third conductive layer; 2213. fourth conductive layer; 22121. third surface; 22131. fourth surface; 2221. fifth edge; 2222. sixth edge; 2231. seventh edge; 2232. eighth edge; 2201. fifth side; 2202. sixth side; 2203. seventh side; 2204. eighth side; 2205. third groove; 2206. fourth groove; 2207. seventh groove; 2208. eighth groove;
230. separator;
240. first insulator;
250. second insulator;
260. third insulator;
270. fifth insulator;
280. sixth insulator;
290. seventh insulator;
201. outer surface; 2011. fifth surface; 2012. sixth surface;
300. first conductive member;
400. second conductive member;
500. third conductive member;
600. fourth conductive member;
1'. electrochemical apparatus;
200'. electrode assembly;
210'. first electrode plate; 211'. first current collector; 212'. first active material layer; 213'. second active material layer; 214'. first connecting portion; 215'. first bending portion; 2111'. first insulation layer; 2112'. first conductive layer; 2113'. second conductive layer; 21121'. first surface; 21123'. first area; 21124'. second area; 21133'. third area; 21134'. fourth area; 2101'. first side; 2103'. third side;
220'. second electrode plate; 221'. second current collector; 222'. third active material layer; 223'. fourth active material layer; 224'. second connecting portion; 225'. second bending portion; 2211'. second insulation layer; 2212'. third conductive layer; 2213'. fourth conductive layer; 22121'. third surface; 22131'. fourth surface; 22123'. fifth area; 22124'. sixth area; 22133'. seventh area; 22134'. fourth area;
230'. separator;
201'. outer surface; 2011'. fifth surface; 2012'. sixth surface;
300'. first conductive member;
400. second conductive member;
500'. third conductive member;
600. fourth conductive member;
700'. bonding member;
800'. first insulation adhesive;
1". electrochemical apparatus;
200". electrode assembly;
210". first electrode plate; 214". first connecting portion;
220". second electrode plate; 224". second connecting portion;
230". separator;
300". first conductive member;
500". third conductive member;
900". insulation coating layer; and
2. electronic device.

### DETAILED EMBODIMENTS

For ease of understanding this application, the following further describes this application in detail with reference to the accompanying drawings and specific embodiments. It should be noted that when a component is referred to as being "fixed to", "fastened to", or "mounted to" another component, it may be directly fixed to the another component, or there may be one or more components therebetween. When a component is referred to as being "connected to" another component, it may be directly connected to the another component, or there may be one or more components therebetween. The terms "vertical", "horizontal", "left", "right", "inside", "outside", and similar expressions used in this specification are merely for description purposes.

Unless otherwise defined, all technical and scientific terms used in this specification shall have the same meanings as commonly understood by persons skilled in the art to which this application belongs. The terms used in this specification of this application are merely for describing specific embodiments rather than to limit this application. The term "and/or" used in this specification includes any and all combinations of one or more associated items that are listed.

In addition, technical features involved in different embodiments of this application that are described below may be combined provided that they do not conflict with each other.

In this specification, "mounting" includes fixing or limiting an element or apparatus to a specific location or place by means of welding, screwing, clamping, bonding, or the like. The element or apparatus may stay still at the specific location or place, or may move within a limited range. After being fixed or limited to the specific location or place, the element or apparatus can be disassembled or cannot be disassembled. This is not limited in the embodiments of this application.

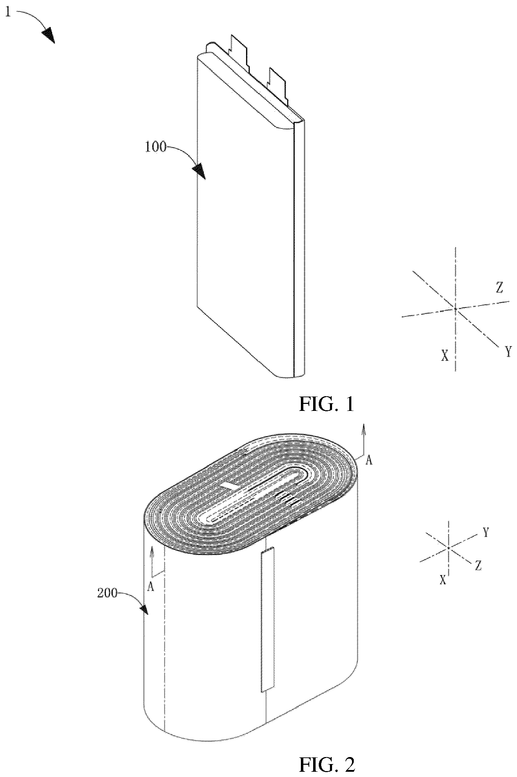

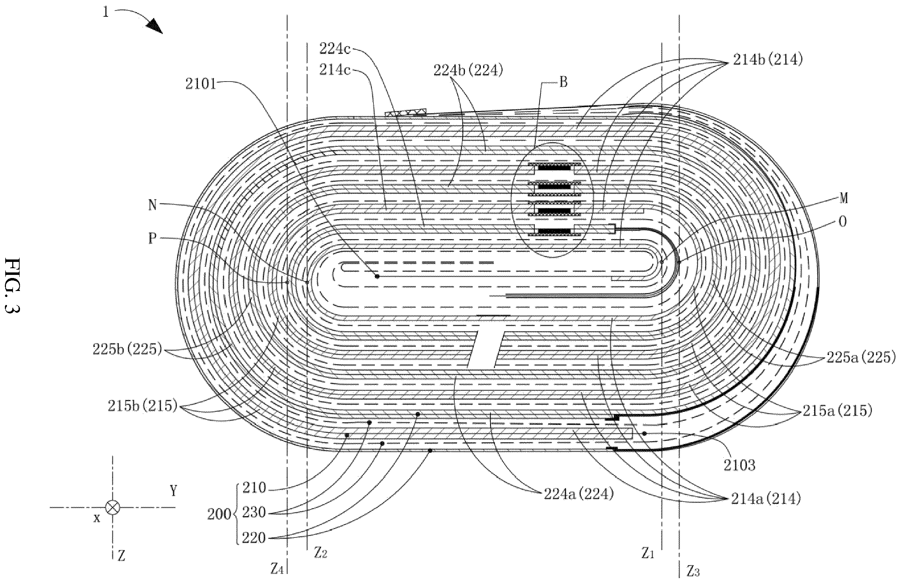

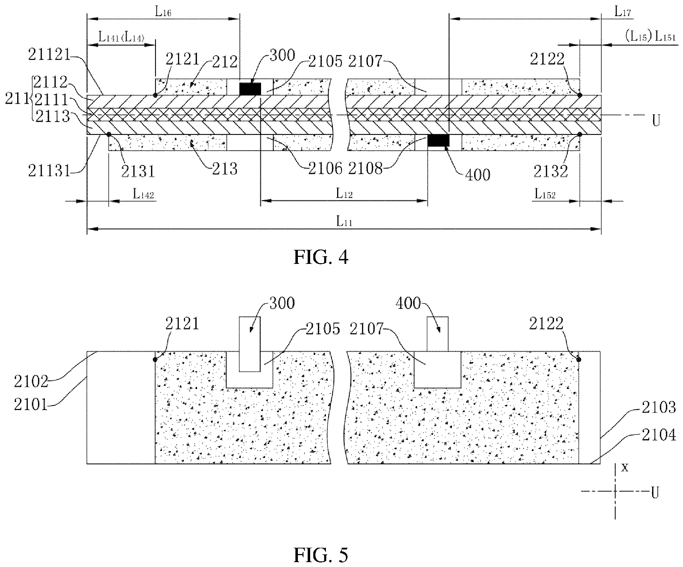

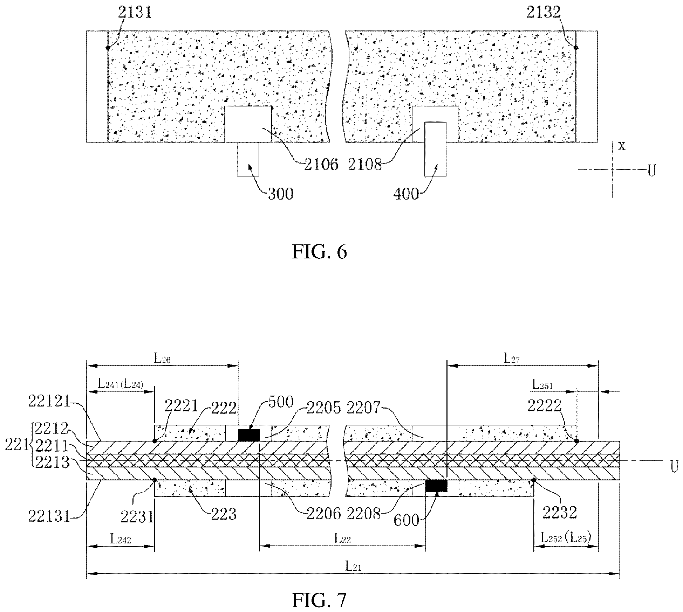

Refer to FIG. 1 to FIG. 3. FIG. 1 is a schematic diagram of an electrochemical apparatus 1 according to an embodiment of this application. FIG. 2 is a schematic stereogram of the electrochemical apparatus 1 with a housing hidden. FIG. 3 is a schematic cross-sectional diagram of FIG. 2 along line A-A. The electrochemical apparatus 1 includes a housing 100, an electrode assembly 200, a first conductive member, and a second conductive member. The housing 100 is an installation substrate for the components, and also serves as an external protection element of the electrochemical apparatus 1. The electrode assembly 200 is a wound electrode assembly, and is accommodated in the housing 100. The electrode assembly 200 includes a first electrode plate 210, a second electrode plate 220, and a separator 230 disposed between the first electrode plate 210 and the second electrode plate 220. Refer to FIG. 4 to FIG. 6. FIG. 4 is a schematic diagram of the first electrode plate 210 in an unfolded state as viewed from first direction X shown in the figure (FIG. 1 and FIG. 2). FIG. 5 is a top view of FIG. 4. FIG. 6 is a bottom view of FIG. 4. The first electrode plate 210 includes a first current collector 211, a first active material layer 212, and a second active material layer 213. The first current collector 211 includes a first conductive layer 2112, a first insulation layer 2111, and a second conductive layer 2113 that are stacked, where the first insulation layer 2111 is disposed between the first conductive layer 2112 and the second conductive layer 2113, the first conductive layer 2112 has a first surface 21121 facing away from the first insulation layer 2111, and the second conductive layer 2113 has a second surface 21131 facing away from the first insulation layer 2111. The first active material layer 212 is disposed on the first surface 21121, and the second active material layer 213 is disposed on the second surface 21131. The first current collector 211 includes at the periphery a first side 2101 extending along first direction X shown in the figure and a second side 2102 adjoining the first side 2101, where the second side 2102 has a greater length than the first side 2101. The first conductive member 300 is connected to the first conductive layer 2112, and the second conductive member 400 is connected to the second conductive layer 2113, where the first conductive member 300 is electrically connected to the second conductive member 400. It should be noted that the "first direction" described in this application is an extending direction of the first side 2101, and is also an extending direction of a width side of the first current collector 211.

In order to make a specific structure of the electrochemical apparatus 1 better understood, the housing 100, electrode assembly 200, first conductive member 300, and second conductive member 400 are described in detail below in turn.

Specifically, refer to FIG. 1 for the housing 100. The housing 100 is of a flat box structure with an accommodating cavity (which is not shown in the figure) for accommodating the electrode assembly 200, at least part of the first conductive member 300, at least part of the second conductive member 400, and an electrolyte. In this embodiment, the electrochemical apparatus 1 may be a pouch cell battery, and correspondingly, the housing 100 is made of aluminum-plastic film or another flexible sheet. Certainly, in other embodiments of this application, the electrochemical apparatus 1 may alternatively be a hard shell battery, such as a steel-shell battery or an aluminum-shell battery. In addition, in other embodiments of this application, the housing 100 may be block-shaped, column-shaped, or the like, which are not described in detail herein.

For the electrode assembly 200, refer to FIG. 2 and FIG. 3 first, and with reference to other accompanying drawings, the electrode assembly 200 is accommodated in the accommodating cavity, and includes the first electrode plate 210, the second electrode plate 220, and the separator 230. The first electrode plate 210 and the second electrode plate 220 have opposite polarity, and one of them is an anode plate and the other is a cathode plate. The first electrode plate 210 and the second electrode plate 220 are spaced apart with the separator 230 provided in between for separation. In this embodiment, the electrode assembly 200 is a wound electrode assembly. Specifically, the first electrode plate 210, the second electrode plate 220, and the separator 230 are stacked and wound together to form a columnar structure with an oblong cross-section, for ease of accommodation in the accommodating cavity. A specific structure of the electrode assembly 200 is described below by using an example in which the first electrode plate 210 is an anode plate and the second electrode plate 220 is a cathode plate. However, it should be understood that in other embodiments of this application, the first electrode plate 210 may alternatively be a cathode plate, and accordingly, the second electrode plate 220 is an anode plate.

It should be noted that a specific form of the electrode assembly 200 is not limited in this application, and in other embodiments of the application, the electrode assembly 200 may have another form. For example, in other embodiments of this application, the electrode assembly 200 is a stacked structure, which includes the first electrode plate 210 and the second electrode plate 220 alternately disposed along a stacking direction, and includes the separator stacked in between the neighboring first electrode plate 210 and second electrode plate 220.

Specifically, for the first electrode plate 210, refer to FIG. 4 to FIG. 6, which are three schematic diagrams of the first electrode plate 210 in an unfolded state, respectively, and with reference to other accompanying drawings, the first electrode plate 210 includes the first current collector 211, the first active material layer 212, and the second active material layer 213. The first current collector 211 is of a sheet-like structure, including at the periphery the first side 2101, the second side 2102, a third side 2103, and a fourth side 2104. The first side 2101 extends along first direction X shown in the figure. The second side 2102 extends along fourth direction U shown in the figure, and is adjoining the first side 2101. The third side 2103 is provided opposite the first side 2101 in fourth direction U, the fourth side 2104 is provided opposite the second side 2102 in a first direction X, and the first side 2101, the second side 2102, the third side 2103, and the fourth side 2104 together enclose a rectangle. That is, without considering thickness of the first current collector 211, the first current collector 211 as a whole is rectangular in an unfolded state. In this embodiment, the second side 2102 has a greater length than the first side 2101. In other words, the second side 2102 and the fourth side 2104 form length sides of the first current collector 211, and the first side 2101 and the third side 2103 form width sides of the first current collector 211. It should be noted that the "fourth direction" in this application is an extending direction of the second side 2102. In this embodiment, fourth direction U is perpendicular to first direction X. When the first electrode plate 210 is in an unfolded state, fourth direction U is an extending direction of a straight line; when the first electrode plate 210 is in a wound state, fourth direction U is an extending direction of a helix. Certainly, in other embodiments of this application, fourth direction U and first direction X may have another included angle value.

In this embodiment, the first current collector 211 is a composite current collector and specifically includes the first conductive layer 2112, the first insulation layer 2111, and the second conductive layer 2113 that are stacked in sequence along a thickness direction of the first current collector 211. The first insulation layer 2111 is made of insulating materials, which serves as a substrate for disposing the first conductive layer 2112 and the second conductive layer 2113 and also physically separating the first conductive layer 2112 and the second conductive layer 2113. Optionally, the first insulation layer 2111 includes polymeric materials, and further optionally, includes at least one of polyethylene terephthalate, polybutylene terephthalate, polyethylene naphthalate, polyether-ether-ketone, polyimide, polyamide, polyethylene glycol, polyamideimide, polycarbonate, cyclic polyolefin, polyphenylene sulfide, polyvinyl acetate, polytetrafluoroethylene, polymethylene naphthalene, polyvinylidene fluoride, polyethylene naphthalate, polypropylene carbonate, poly(vinylidene fluoride-hexafluoropropylene), poly(vinylidene fluoride-co-chlorotrifluoroethylene), silicone, vinylon, polypropylene, polyethylene, polyvinyl chloride, polystyrene, polyether nitrile, polyurethane, polyphenylene ether, polyester, polysulfone, and their derivatives, sodium carboxymethyl cellulose, styrene-butadiene rubber, fluorinated rubber, polyvinyl alcohol, or polyvinylidene fluoride. Optionally, thickness of the first insulation layer 2111 ranges from 1 micron to 40 microns. The first conductive layer 2112 and the second conductive layer 2113 are made of conductive materials, which are disposed on two sides of the first insulation layer 2111 respectively. Specific materials of the conductive layer are not limited in this application. For example, the first conductive layer 2112 and/or the second conductive layer 2113 may be made of copper. It can be understood that in other embodiments of this application, the first conductive layer 2112 and/or the second conductive layer 2113 may alternatively be made of other suitable conductive materials such as copper alloy, nickel or nickel alloy, which is not described in detail herein. The first conductive layer 2112 and the second conductive layer 2113 may be disposed on the first insulation layer 2111 by means of spraying, electroplating, deposition or bonding, which is not limited in this application. Optionally, thickness of the first conductive layer 2112 and/or the second conductive layer 2113 ranges from 1 micron to 10 microns.

The first active material layer 212 and the second active material layer 213 are disposed on surfaces of the first current collector 211, and are material layers for lithium ions to be intercalated or deintercalated. The first conductive layer 2112 has the first surface 21121 facing away from the first insulation layer 2111, and the first active material layer 212 is disposed on the first surface 21121. The first active material layer 212 has a first edge 2121 and a second edge 2122, where the first edge 2121 and the second edge 2122 are located on the first surface 21121 of the first current collector 211. In fourth direction U, the first edge 2121 and the second edge 2122 are located at two ends of the first active material layer 212 respectively, where the first edge 2121 is closer to the first side 2101 than the second edge 2122, the first edge 2121 is at a first distance L₁₄₁ from the first side 2101, and the second edge 2122 is at a second distance L₁₅₁ from the third side 2103. Similarly, the second conductive layer 2113 has the second surface 21131 facing away from the first insulation layer 2111, and the second active material layer 213 is disposed on the second surface 21131. The second active material layer 213 has a third edge 2131 and a fourth edge 2132, where the third edge 2131 and the fourth edge 2132 are located on the second surface 21131 of the first current collector 211. In fourth direction U, the third edge 2131 and the fourth edge 2132 are located at two ends of the second active material layer 213 respectively, where the third edge 2131 is closer to the first side 2101 than the fourth edge 2132, the third edge 2131 is at a third distance L₁₄₂ from the first side 2101, and the fourth edge 2132 is at a fourth distance L₁₅₂ from the third side 2103. It should be noted that a distance between an edge and a side described in this application means a distance between the midpoint of the edge and the midpoint of the side. For example, the distance between the first edge 2121 and the first side 2101 means a distance between the midpoint of the first edge 2121 and the midpoint of the first side 2101.

Refer to FIG. 3 again. The electrode assembly 200 as a whole is wound, which causes the first electrode plate 210 to be bent several times and stacked into multiple layers in the third direction Z. When the electrode assembly 200 is viewed from first direction X shown in FIG. 3, at the first corner encountered, in a winding direction of the electrode assembly 200, from the start of the first side 2101 in the first electrode plate 210, a point located on the outermost side in a second direction Y shown in the figure is determined as first point M. A line parallel to third direction Z is made with first point M as a reference, and the line is defined as first reference line Z₁. During viewing from first direction X, at the second corner encountered, in the winding direction of the electrode assembly 200, from the start of the first side 2101 in the first electrode plate 210, a point located on the outermost side in the second direction Y shown in the figure is determined as second point N. A line parallel to third direction Z is made with second point N as a reference, and the line is defined as second reference line Z₂. It should be noted that the "third direction" mentioned in this application is a thickness direction of the electrochemical apparatus 1 and is perpendicular to first direction X described above, and the "second direction" mentioned in this application is perpendicular to both first direction X and third direction Z, that is, first direction X, second direction Y, and third direction Z are perpendicular to each other.

The first electrode plate 210 is wound with respect to the first side 2101 and includes a plurality of first connecting portions 214 and a plurality of first bending portions 215, where the first connecting portions 214 and the first bending portions 215 are arranged alternately along the winding direction of the electrode assembly 200. The first connecting portion 214 is one of the "plurality of first connecting portions 214". The first connecting portion 214, as viewed from first direction X, extends along second direction Y shown in the figure and is located between first reference line Z₁ and second reference line Z₂; and the first connecting portions 214 are arranged along third direction Z. The first bending portion 215 connects two neighboring first connecting portions 214 in the winding direction of the electrode assembly 200. The plurality of first connecting portions 214 are classified into first connecting portions 214a and first connecting portions 214b. An end of the first connecting portion 214a closer to first reference line Z₁ points in a direction determined by an end closer to second reference line Z₂, the direction being opposite to a direction in which the first electrode plate 210 extends from the first side 2101 to the third side 2103. An end of the first connecting portion 214b closer to first reference line Z₁ points in a direction determined by an end closer to second reference line Z₂, the direction being the same as a direction in which the first electrode plate 210 extends from the first side 2101 to the third side 2103. As shown in FIG. 3, each first connecting portion 214a is located below each first connecting portion 214b. The first bending portion 215 is one of the "plurality of first bending portions 215". The plurality of first bending portions 215 are classified into first bending portions 215a and first bending portions 215b. The first bending portion 215a is located on a side of first reference line Z₁ farther away from the first connecting portion 214, and connects one first connecting portion 214a to one first connecting portion 214b. The first bending portions 215a are arranged in turn from the inside to outside. The first bending portion 215b is located on a side of second reference line Z₂ farther away from the first connecting portion 214, and connects one first connecting portion 214b to one first connecting portion 214a. The first bending portions 215b are arranged in turn from the inside to outside.

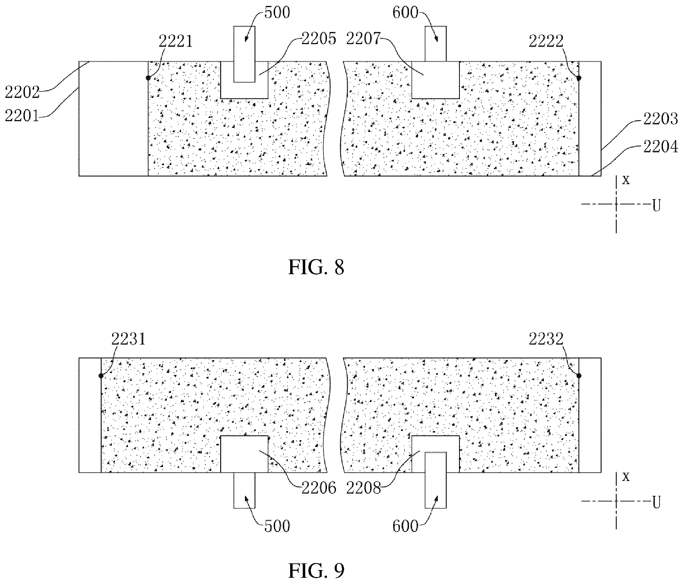

For the second electrode plate 220, reference may be made to FIG. 7 to FIG. 9 first, which are three schematic diagrams of the second electrode plate 220 in an unfolded state respectively, and with reference to other accompanying drawings, the second electrode plate 220 includes a second current collector 221, a third active material layer 222, and a fourth active material layer 223. The second current collector 221 of a sheet-like structure, including at the periphery a fifth side 2201, a sixth side 2202, a seventh side 2203, and an eighth side 2204. The fifth side 2201 extends along first direction X, and the sixth side 2202 extends along fourth direction U and is provided adjoining the fifth side 2201. The third side 2103 is provided opposite the fifth side 2201 in fourth direction U, the eighth side 2204 is provided opposite the sixth side 2202 in the first direction X, and the fifth side 2201, the sixth side 2202, the seventh side 2203, and the eighth side 2204 together enclose a rectangle. That is, without considering thickness of the second current collector 221, the second current collector 221 as a whole is rectangular in an unfolded state. In this embodiment, the sixth side 2202 has a greater length than the fifth side 2201. In other words, the sixth side 2202 and the eighth side 2204 form length sides of the second current collector, and the fifth side 2201 and the seventh side 2203 form width sides of the second current collector 221.

In this embodiment, the second current collector 221 is a composite current collector and specifically includes a third conductive layer 2212, a second insulation layer 2211, and a fourth conductive layer 2213 that are stacked in sequence along a thickness direction of the second current collector 221. The second insulation layer 2211 is made of insulating materials, which serves as a substrate for disposing the third conductive layer 2212 and the fourth conductive layer 2213. The second insulation layer 2211 is located between the third conductive layer 2212 and the fourth conductive layer 2213, physically separating the third conductive layer 2212 and the fourth conductive layer 2213. Optionally, the second insulation layer 2211 includes polymeric materials, and further optionally, includes at least one of polyethylene terephthalate, polybutylene terephthalate, polyethylene naphthalate, polyether-ether-ketone, polyimide, polyamide, polyethylene glycol, polyamideimide, polycarbonate, cyclic polyolefin, polyphenylene sulfide, polyvinyl acetate, polytetrafluoroethylene, polymethylene naphthalene, polyvinylidene fluoride, polyethylene naphthalate, polypropylene carbonate, poly(vinylidene fluoride-hexafluoropropylene), poly(vinylidene fluoride-co-chlorotrifluoroethylene), silicone, vinylon, polypropylene, polyethylene, polyvinyl chloride, polystyrene, polyether nitrile, polyurethane, polyphenylene ether, polyester, polysulfone, and their derivatives, sodium carboxymethyl cellulose, styrene-butadiene rubber, fluorinated rubber, polyvinyl alcohol, or polyvinylidene fluoride. Optionally, thickness of the second insulation layer 2211 ranges from 1 micron to 40 microns. The third conductive layer 2212 and the fourth conductive layer 2213 are made of conductive materials, which are disposed on two sides of the second insulation layer 2211 respectively. Specific materials of the conductive layer are not limited in this application. For example, in this embodiment, the second electrode plate 220 is a cathode plate, and the third conductive layer 2212 and/or the fourth conductive layer 2213 may be made of aluminum. It can be understood that in other embodiments of this application, the third conductive layer 2212 and/or the fourth conductive layer 2213 may alternatively be made of other suitable conductive materials such as aluminum alloy, nickel, or nickel alloy, which are not described in detail herein. The third conductive layer 2212 and the fourth conductive layer 2213 may be disposed on the second insulation layer 2211 by means of spraying, electroplating, or bonding, which is not limited in this application. Optionally, thickness of the third conductive layer 2212 and/or the fourth conductive layer 2213 ranges from 1 micron to 10 microns.

The third active material layer 222 and the fourth active material layer 223 are disposed on surfaces of the second current collector 221, and are material layers for lithium ions to be intercalated or deintercalated. The third conductive layer 2212 has a third surface 22121 facing away from the second insulation layer 2211, and the third active material layer 222 is disposed on the third surface 22121. The third active material layer 222 has a fifth edge 2221 and a sixth edge 2222, where the fifth edge 2221 and the sixth edge 2222 are located on the third surface 22121 of the second current collector 221. In fourth direction U, the fifth edge 2221 and the sixth edge 2222 are located at two ends of the third active material layer 222 respectively, where the fifth edge 2221 is closer to the fifth side 2201 than the sixth edge 2222. The fifth edge 2221 is at a fifth distance L₂₄₁ from the fifth side 2201, and the sixth edge 2222 is at a sixth distance L₂₅₁ from the seventh side 2203. Similarly, the fourth conductive layer 2213 has a fourth surface 22131 facing away from the second insulation layer 2211, and the fourth active material layer 223 is disposed on the fourth surface 22131. The fourth active material layer 223 has a seventh edge 2231 and an eighth edge 2232, where the seventh edge 2231 and the eighth edge 2232 are located on the fourth surface 22131 of the second current collector 221. In fourth direction U, the seventh edge 2231 and the eighth edge 2232 are located at two ends of the fourth active material layer 223 respectively, where the seventh edge 2231 is closer to the fifth side 2201 than the eighth edge 2232. The seventh edge 2231 is at a seventh distance L₂₄₂ from the fifth side 2201, and the eighth edge 2232 is at an eighth distance L₂₅₂ from the seventh side 2203.

Refer to FIG. 3 again. The electrode assembly 200 as a whole is wound, which causes the second electrode plate 220 to be bent several times and stacked into multiple layers in a third direction Z. When the electrode assembly 200 is viewed from the first direction X, at the first corner encountered, in the winding direction of the electrode assembly 200, from the start of the fifth side 2201 in the second electrode plate 220, a point located on the outermost side in the second direction Y is determined as third point O. A line parallel to third direction Z is made with third point O as a reference, and the line is defined as third reference line Z₃. At the second corner encountered, in the winding direction of the electrode assembly 200, from the start of the fifth side 2201 in the second electrode plate 220, a point located on the outermost side in the second direction Y is determined as fourth point P. A line parallel to third direction Z is made with fourth point P as a reference, and the line is defined as fourth reference line Z₄.

The second electrode plate 220 is wound with respect to the fifth side 2201 and includes a plurality of second connecting portions 224 and a plurality of second bending portions 225, where the second connecting portions 224 and the second bending portions 225 are arranged alternately along the winding direction of the electrode assembly 200. The second connecting portion 224 is one of the "plurality of second connecting portions 224". The second connecting portion 224, as viewed from first direction X, extends along second direction Y and is located between third reference line Z3 and fourth reference line Z4; and the second connecting portions 224 are arranged along third direction Z. The second bending portion 225 connects two neighboring second connecting portions 224 in the winding direction of the electrode assembly 200. The plurality of second connecting portions 224 are classified into second connecting portions 224a and second connecting portions 224b. An end of the second connecting portion 224a closer to third reference line Z₃ points in a direction determined by an end closer to fourth reference line Z₄, the direction being opposite to a direction in which the second electrode plate 220 extends from the fifth side 2201 to the seventh side 2203. An end of the second connecting portion 224b closer to third reference line Z₃ points in a direction determined by an end closer to fourth reference line Z₄, the direction being the same as a direction in which the second electrode plate 220 extends from the fifth side 2201 to the seventh side 2203. The second bending portion 225 is one of the "plurality of bending portions 225". The plurality of second bending portions 225 are classified into second bending portions 225a and second bending portions 225b, where the second bending portions 225a are located on a side of third reference line Z₃ farther away from the second connecting portion 224, and the second bending portion 225b is located on a side of fourth reference line Z₄ farther away from the second connecting portion 224.

The above-described separator 230 has a main function of separating the first electrode plate 210 and the second electrode plate 220 and conduct ions, and materials of the separator 230 are not specified herein. In some embodiments, the separator 230 includes a porous substrate. In some embodiments, the separator 230 further includes a functional coating layer disposed on the porous substrate, where the functional coating layer may include at least one of an adhesive or inorganic particles. In some embodiments, the porous substrate is a polymer film, a multilayer polymer film, or a non-woven fabric composed of any one of the following polymers or tow ore more mixtures of the following: polyethylene, polypropylene, polyethylene terephthalate, polybutylene terephthalate, polydiformylphenylenediamine, polyester, polyacetal, polyamide, polycarbonate, polyimide, polyether-ether-ketone, polyetherketoneketone, polyether ketone, polyamideimide, polybenzimidazole, polyethersulfone, polyphenylene oxide, cycloolefin copolymers, polyphenylene sulfide, or polyvinyl naphthaline. These polymers have high thermal stability and are easy for surface finishing and coating. In addition, these polymers have good tenacity and are easy to bend. In some embodiments, a binder includes at least one of the following: vinylidene fluoride-hexafluoropropylene copolymer, vinylidene fluoride-trichloroethylene copolymer, polyacrylate, polyacrylic acid, polyvinylpyrrolidone, polyacrylonitrile, polyvinylpyrrolidone, polyvinyl acetate, ethylene-acetic acid ethen copolymer, polyimide, polyoxyethylene, cellulose acetate, cellulose acetate butyrate, cellulose acetate propionate, cyanoethyl amylopectin, cyanethyl polyvinyl alcohol, cyanoethyl cellulose, cyanethyl sucrose, amylopectin, sodium carboxymethyl cellulose, lithium carboxymethyl cellulose, acrylonitrile-styrene-butadiene copolymer, polyvinyl alcohol, polyvinyl ether, polytetrafluoroethylene, polyhexafluoropropylene, butadiene-styrene copolymer, or polyvinylidene fluoride. These polymers can produce a strong bonding effect to bond inorganic particles together or bonding the separator 230 and the first electrode plate 210/second electrode plate 220 together as an entirety, improving hardness of the electrode assembly 200. In other embodiments, the binder may also include other polymers. In some embodiments, the inorganic particles include at least one of the following: silicon dioxide, aluminum oxide, titanium oxide, zinc oxide, magnesium oxide, hafnium dioxide, tin oxide, zirconium oxide, yttrium oxide, silicon carbide, boehmite, magnesium hydroxide, aluminum hydroxide, calcium titanate, barium titanate, lithium phosphate, titanium lithium phosphate, or lanthanum titanate lithium. All these inorganic particles have high thermal stability and can improve high-temperature resistance of the electrochemical apparatus 1.

For the first conductive member 300 and the second conductive member 400, reference may be specifically made to FIG. 4 to FIG. 6, and with reference to other accompanying drawings, the first conductive member 300 is connected to the first conductive layer 2112 and the second conductive member 400 is connected to the second conductive layer 2113, where the first conductive member 300 is electrically connected to the second conductive member 400, thereby enabling electronic conduction between the first conductive layer 2112 and the second conductive layer 2113, and improving a current flow capacity of the first electrode plate 210. The first conductive member 300 is of a sheet-like structure, where one end of the first conductive member 300 is fastened to the first surface 21121 through welding, and the other end thereof extends out of the first current collector 211. The second conductive member 400 is also of a sheet-like structure, where one end of the second conductive member 400 is fastened to the second surface 21131 through welding, and the other end thereof extends out of the first current collector 211. The parts of the second conductive member 400 and the first conductive member 300 that extend out of the first current collector 211 are electrically connected. In the extending direction of the second side 2102, the first conductive member 300 is closer to the first side 2101 than the second conductive member 400, the first conductive member 300 is at a distance L₁₆ from the first side 2101, and the second conductive member 400 is at a distance L₁₇ from the third side 2103. It should be noted that a distance between a conductive member and a side in this application means a distance between an edge line of the conductive member closer to the side and the midpoint of the side. For example, the distance between the first conductive member 300 and the first side 2101 means a distance between an edge line of the first conductive member 300 closer to the first side and the midpoint of the first side 2101.

In this embodiment, in the extending direction of the second side 2102, a distance between the first conductive member 300 and the second conductive member 400 satisfies: L₁₂/L₁₁ ≥ 1/5, where a length of the second side 2102 in the extending direction of the second side 2102 is L₁₁, and the distance between the first conductive member 300 and the second conductive member 400 in the extending direction of the second side 2102 is L₁₂. If the first conductive member 300 is too close to the second conductive member 400, for example, the two conductive members are disposed close together at a same first connecting portion 214, the electrode assembly 200 will have a large thickness change at the periphery of the first conductive member 300 (or the second conductive member 400), which causes parts of the first electrode plate 210 and the second electrode plate 220 close to the first conductive member 300 (or the second conductive member 400) to experience obvious deformation. This increases the risk of lithium precipitation of the first electrode plate 210 and the second electrode plate 220. However, the setting of L₁₂/L₁₁ ≥ 115 facilitates a large distance between the first conductive member 300 and the second conductive member 400, to prevent the two conductive members from being disposed close together at a same first connecting portion 214. In other words, the first conductive member 300 and the second conductive member 400 can be disposed at different first connecting portions 214, or at two ends of a same connecting portion 214, to reduce the risk of lithium precipitation.

In this embodiment, in the extending direction of the second side 2102, the first conductive member 300 and the second conductive member 400 satisfy: 1/5 ≤ (L₁₆ - L₁₄)/(L₁₁ - L₁₄ - L₁₅) ≤ 2/5, 1/5 ≤ (L₁₇ - L₁₅)/(L₁₁ - L₁₄ - L₁₅) ≤ 2/5, where L₁₄ is a larger value of the first distance L₁₄₁ and the third distance L₁₄₂, and L₁₅ is a larger value of the second distance L₁₅₁ and the fourth distance L₁₅₂. As viewed from a direction perpendicular to the first current collector 211, the first active material layer 212 has a first area layer that overlaps with the second active material layer 213, and the second active material layer 213 has a second area layer that overlaps with the first active material layer 212. As the first conductive member 300 and the second conductive member 400 are structures that export electrons of a corresponding active material layer, when the electrochemical apparatus 1 is charged, a current density of the first electrode plate 210 at positions of the first conductive member 300 and the second conductive member 400 is the highest. If the first conductive member 300 and the second conductive member 400 are too close to each other, lithium ions deintercalated from the second electrode plate 220 move at an extremely fast rate (that is, a rate of intercalating lithium ions into the first electrode plate) in the vicinity of the first conductive member 300 and the second conductive member 400, which leads to part of the lithium ions not being promptly intercalated into the first electrode plate 210 and precipitating on the surface of the first electrode plate 210 in the form of elemental lithium, that is, lithium precipitation. In this embodiment, a distance between the first conductive member 300 and an end of the first area layer (or the second area layer) closer to the first side 2101 accounts for about 1/3 of a length of the first area layer, and a distance between the second conductive member 400 and an end of the first area layer closer to the third side 2103 accounts for about 1/3 of the length of the first area layer; that is, the first conductive member 300 and the second conductive member 400 each are near a three-equal-point of the first area layer in the extending direction of the second side 2102. Therefore, when the electrochemical apparatus 1 is charged, lithium ions that are deintercalated from the second electrode plate 220 and move toward the first electrode plate 210 still move at a fast rate at the periphery of the first conductive member and the second conductive member 400. However, in comparison with the foregoing manner, the distance between the first conductive member 300 and the second conductive member 400 is about 1/3 the length of the first area layer in the extending direction of the second side 2102. Such arrangement can reduce the risk of lithium precipitation at positions at which the first conductive member 300 and the second conductive member 400 are disposed on the first electrode plate 210. Besides, such arrangement also ensures a more uniform lithium ion deintercalation or intercalation rate at the part of the first area layer (or the second area layer) between the first edge and the first conductive member 300, the part of the first area layer (or the second area layer) between the first conductive member 300 and the second conductive member 400, and the part of the first area layer (or the second area layer) between the second edge and the second conductive member 400. Certainly, in this embodiment of this application, the first conductive member 300 may be disposed at one end of the first area layer closer to the first side 2101 and the second conductive member 400 is disposed at one end of the second area layer closer to the third side 2103; or the first conductive member 300 and the second conductive member 400 only satisfy 1/5 ≤ (L₁₆-L₁₄)/(L₁₁ - L₁₄ - L₁₅) ≤ 2/5 or 1/5 ≤ (L₁₇ - L₁₅)/(L₁₁ - L₁₄ - L₁₅) ≤ 2/5.

Further, at least one of the first conductive member 300 and the second conductive member 400 extends out of the housing 100 and forms a first tab of the electrochemical apparatus 1. For example, in some embodiments of this application, the middle of the first conductive member 300 and the middle of the second conductive member 400 are fastened by welding inside the housing 100, and ends of the first conductive member 300 and the second conductive member 400 farther away from the electrode assembly 200 are interconnected and extend out of the housing 100. In this way, the first conductive member 300 and the second conductive member 400 together form the first tab of the electrochemical apparatus 1. Certainly, in other embodiments of this application, only one of the first conductive member 300 and the second conductive member 400 extends out of the housing 100. It should be noted that such arrangement of the first conductive member 300 and the second conductive member 400 is intended to achieve electronic conduction between the first conductive layer 2112 and the second conductive layer 2113, for which the first tab of the electrochemical apparatus 1 is constituted by the first conductive member 300 and/or the second conductive member 400 in this embodiment, but this application is not limited thereto. For example, in some other embodiments of this application, the electrochemical apparatus 1 further includes a first tab, where at least one of the first conductive member 300 and the second conductive member 400 is connected to one end of the first tab, and the other end of the first tab extends out of the housing 100.

In addition, the electrochemical apparatus 1 further includes a third conductive member 500 and a fourth conductive member 600, where the third conductive member 500 is connected to the third conductive layer 2212, and the fourth conductive member 600 is connected to the fourth conductive layer 2213. In this embodiment, connection relationships between each of the third conductive member 500 and the fourth conductive member 600 and the second electrode plate 220 are substantially the same as the connection relationships between each of the first conductive member 300 and the second conductive member 400 and the first electrode plate 210 described above. In other words, the third conductive member 500 is connected to the third conductive layer 2212 and the fourth conductive member 600 is connected to the fourth conductive layer 2213, where the third conductive layer 2212 is electrically connected to the fourth conductive layer 2213. In an extending direction of the sixth side 2202, a length of the sixth side 2202 is L₂₁, spacing between the third conductive member 500 and the fourth conductive member 600 is L₂₂, a distance between the third conductive member 500 and the fifth side 2201 is L₂₆, and a distance between the fourth conductive member 600 and the seventh side 2203 is L₂₇. In this embodiment, the electrochemical apparatus 1 satisfies: L₂₂/L₂₁ ≥ 1/5. In this embodiment, the electrochemical apparatus satisfies: 1/5 ≤ (L₂₆ - L₂₄)/(L₂₁ - L₂₄ - L₂₅) ≤ 2/5 and 1/5 ≤ (L₂₇ - L₂₅)/(L₂₁ - L₂₄-L₂₅) ≤ 2/5, where L₂₄ is a larger value of the fifth distance L₂₄₁ and the seventh distance L₂₄₂, and L₂₅ is a larger value of the sixth distance L₂₅₁ and the eighth distance L₂₅₂.

Certainly, even though the connection relationships between each of the third conductive member 500 and the fourth conductive member 600 and the second electrode plate 220 are described above in this embodiment, this application is not limited thereto, and in other embodiments of this application, the third conductive member 500 (the fourth conductive member 600) may alternatively be disposed at any position on the third surface 22121 (fourth surface 22131). For example, in some other embodiments of this application, the third conductive member 500 is disposed at an end portion of the third surface 22121 closer to the fifth side 2201, and the fourth conductive member 600 is disposed at an end portion of the fourth surface 22131 closer to the seventh side 2203, that is, the third conductive member 500 and the fourth conductive member 600 are disposed at two ends of the second electrode plate 220 in the extending direction of the sixth side 2202. For another example, in other alternative embodiments of this application, the third conductive member 500 is disposed at an end portion of the third surface 22121 closer to the fifth side 2201, and the fourth conductive member 600 is disposed at a middle portion of the fourth surface 22131, that is, one of the third conductive member 500 and the fourth conductive member 600 is disposed at the end portion of the second electrode plate 220 and the other is disposed at the middle portion of the second electrode plate 220 in the extending direction of the sixth side 2202.

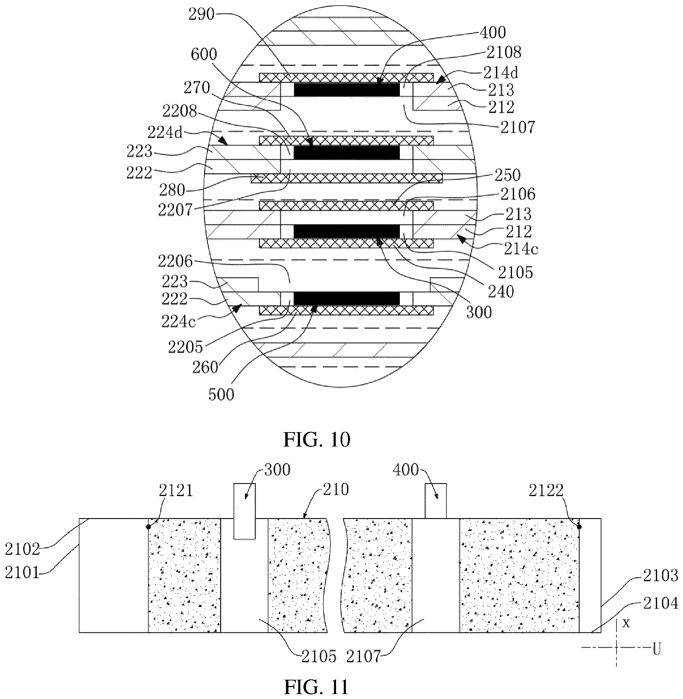

In this embodiment, the first conductive member 300 is mounted to a first connecting portion 214, and the third conductive member 500 is mounted to a second connecting portion 224. For ease of illustration, the first connecting portion 214, with the first conductive member 300 mounted, of the plurality of first connecting portions 214 is defined as a first preset connecting portion 214c, and the second connecting portion 224, with the third conductive member 500 mounted, of the plurality of second connecting portions 224 is defined as a second preset connecting portion 224c. Specifically, refer to FIG. 10. FIG. 10 is a locally enlarged schematic diagram of B in FIG. 3. A portion of the first active material layer 212 is located on the first preset connecting portion 214c. The portion of the first active material layer 212 located on the first preset connecting portion 214c is recessed away from the surface of the first current collector 211 to form a first groove 2105, exposing the first current collector 211, that is, the first groove 2105 penetrates through the surface of the first active material layer 212 away from the first current collector 211. In the first direction X, one end of the first groove 2105 runs through the first active material layer 212. A portion of the second active material layer 213 is located on the first preset connecting portion 214c. The portion of the second active material layer 213 located on the first preset connecting portion 214c is recessed away from the surface of the first current collector 211 to form a second groove 2106, that is, the second groove 2106 penetrates through the surface of the second active material layer 213 away from the first current collector 211. In the first direction X, one end of the second groove 2106 runs through the second active material layer 213. Projections of the second groove 2106 and the first groove 2105 in the third direction Z at least partially overlap. One end of the first conductive member 300 is mounted to the first groove 2105; and optionally, the first conductive member 300 is welded to the first current collector 211. Provision of the first groove 2105 helps exposure of the first current collector 211, so as to facilitate welding of the first conductive member 300, and in addition, the first groove 2105 may be further configured to receive a welding mark formed by a welding process. Similarly, the provision of the second groove 2106 also facilitates receiving a welding mark formed in welding the first conductive member 300.

In the third direction Z, the second preset connecting portion 224c is located on a side of the first conductive member 300 away from the first preset connecting portion 214c; and, in the plurality of first connecting portions 214 and the plurality of second connecting portions 224, the second preset connecting portion 224 is disposed adjacently to the first preset connecting portion 214c, that is, the second preset connecting portion 224c is one of the many second connecting portions 224 that is adjacent to the first preset connecting portion 214c. A portion of the third active material layer 222 is located on the second preset connecting portion 224c. The portion of the third active material layer 222 located on the second preset connecting portion 224c is recessed away from the surface of the second current collector 221 to form a third groove 2205, exposing the second current collector 221, that is, the third groove 2205 penetrates through the surface of the third active material layer 222 away from the second current collector 221. In the first direction X, one end of the third groove 2205 runs through the third active material layer 222. A portion of the fourth active material layer 223 is located on the second preset connecting portion 224c. The portion of the fourth active material layer 223 located on the second preset connecting portion 224c is recessed away from the surface of the second current collector 221 to form a fourth groove 2206, that is, the fourth groove 2206 penetrates through the surface of the fourth active material layer 223 away from the second current collector 221. In the first direction X, one end of the fourth groove 2206 runs through the fourth active material layer 223. Projections of the fourth groove 2206 and the third groove 2205 in the third direction Z at least partially overlap. One end of the third conductive member 500 is mounted to the third groove 2205; and optionally, the third conductive member 500 is welded to the second current collector 221. Provision of the third groove 2205 helps exposure of the second current collector 221, so as to facilitate welding of the third conductive member 500, and in addition, the third groove 2205 may be further configured to receive a welding mark formed by a welding process. Similarly, the provision of the fourth groove 2206 also facilitates receiving a welding mark formed in welding the first conductive member 300.

Since in some cases the first conductive member 300 may be thicker than the first active material layer 212, causing the first conductive member 300 (or welding burrs on the first conductive member 300) to protrude relative to the first active material layer 212. In addition, even though the thickness of the first conductive member 300 is not greater than the thickness of the first active material layer 212, in some use scenarios, the first preset connecting portion 214c is deformed so that the first conductive member 300 (or the welding burrs on the first conductive member 300) protrudes relative to the first active material layer 212, and this may result in the welding burrs piercing through the separator 230, causing short circuit between the first electrode plate 210 and the second electrode plate 220. To relieve this disadvantage, in this embodiment, the portion of the fourth active material layer 223 located on the second preset connecting portion 224c is provided on a side of the second current collector 221 facing the first conductive member 300 and is provided with the fourth groove 2206; and projections of the fourth groove 2206 and the first conductive member 300 in the third direction at least partially overlap. Such arrangement is intended to make the first conductive member 300 correspond to a position of the fourth groove 2206, thereby facilitating the fourth groove 2206 to accommodate a portion of the first conductive member 300 (or the welding burrs on the first conductive member 300) protruding relative to the surface of the first active material layer 212. In this embodiment, the projection of the fourth groove 2206 in the third direction Z covers the projection of the portion of the first conductive member 300 located on the first preset connecting portion 214c in the third direction Z. In this way, the fourth groove 2206 can completely accommodate the first conductive member 300 and a protruding portion of its welding burrs relative to the first active material layer 212. This can reduce a risk of damage to an interface of the second electrode plate 220 caused by the protruding portion being pressed against the second electrode plate 220 to some extent. In some optional embodiments, at least part of the first conductive member 300 extends into the fourth groove 2206; and in some optional embodiments, a portion of the first conductive member 300 located on the first preset connecting portion 214c and protruding relative to the first active material layer 212 completely extends into the fourth groove 2206.

Further, to reduce a risk of the burrs formed by welding of the first conductive member 300 from piercing through the separator 230, the electrochemical apparatus 1 further includes a first insulator 240. Specifically, still refer to FIG. 10. The first insulator 240 is fixed to a side of the first preset connecting portion 214c provided with the first conductive member 300 and covers at least part of the first groove 2105, separating the first conductive member 300 from the separator 230 adjacent to the first insulator 240. Optionally, the first insulator 240 includes bonding adhesive. Certainly, in other embodiments of this application, the first insulator 240 may also include any other insulating element as long as the insulating element can separate the first conductive member 300 from the separator 230. To further reduce the risk of the burrs formed by welding of the first conductive member 300 from piercing through the separator 230, the electrochemical apparatus 1 further includes a second insulator 250. Specifically, still refer to FIG. 10. The second insulator 250 is fixed to a side of the first preset connecting portion 214c provided with the second active material layer 213 and covers at least part of the second groove 2106, separating the welding burrs in the second groove from the adjacent separator 230. Optionally, the second insulator 250 includes bonding adhesive. Similarly, in other embodiments of this application, the second insulator 250 may also include any other insulating element.

Further, to reduce the risk of the burrs formed by welding of the third conductive member 500 from piercing through the separator 230, the electrochemical apparatus 1 further includes a third insulator 260. Specifically, still refer to FIG. 10. The third insulator 260 is fixed to a side of the second preset connecting portion 224C provided with the third conductive member 500 and covers at least part of the third groove 2205, separating the third conductive member 500 from the separator 230 adjacent to the third insulator 260. Optionally, the third insulator 260 includes bonding adhesive. Certainly, in other embodiments of this application, the third insulator 260 may also include any other insulating element as long as the insulating element can separate the third conductive member 500 from the separator 230. To further reduce the risk of the burrs formed by welding of the third conductive member 500 from piercing through the separator 230, the electrochemical apparatus 1 further includes a fourth insulator. Specifically, the fourth insulator is fixed to a side of the second preset connecting portion 224c provided with the fourth active material layer 223 and covers at least part of the fourth groove 2206, separating the welding burrs in the fourth groove 2206 from the adjacent separator 230. Optionally, the fourth insulator includes bonding adhesive. Similarly, in other embodiments of this application, the fourth insulator may also include any other insulating element.

If the fourth groove 2206 has a smaller width in the second direction Y than the first insulator 240, when the electrochemical apparatus 1 is charged, lithium ions in the active material located at the edge of the fourth groove 2206 and opposite to the position of the first insulator 240 will still deintercalate from the second electrode plate 220 and move to the first electrode plate 210. Because a portion of the active material of the first electrode plate 210 is covered by the first insulator240, some lithium ions deintercalated from the second electrode plate 220 cannot be intercalated in the first electrode plate 210, and are precipitated in an elemental form on the surface of the first electrode plate 210, causing lithium precipitation. This may further cause some active materials in the first electrode plate 210 to fail to deintercalate from the first electrode plate 210 during discharging. In this embodiment, in the second direction Y, two ends of the first insulator 240 are located between two ends of the fourth groove 2206, and in this way, the foregoing disadvantage can be relieved to some extent.

It is worth mentioning that, since the provision of the fourth groove 2206 can be used to accommodate the portion of the first conductive member 300 located on the first preset connecting portion 214c, that is, the fourth groove 2206 corresponds to the position of the first insulator 240, the fourth insulator in this embodiment of this application can actually be omitted. That is, the provision of the fourth groove 2206 corresponding to the position of the first conductive member 300 helps to save a layer of the bonding adhesive and then helps to decrease the thickness of the electrode assembly 200, so as to improve the energy density of the electrochemical apparatus 1.

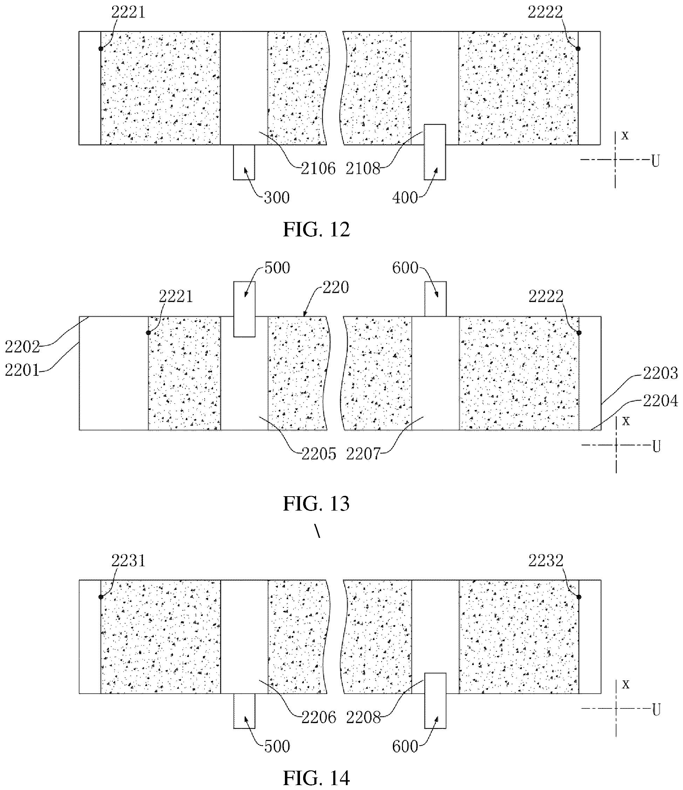

In some embodiments, to facilitate both the first conductive member 300 and the third conductive member 500 to extend out of the electrode assembly 200 without interference, one end of the first conductive member 300 extending out of the first electrode plate 210 and one end of the third conductive member 500 extending out of the second electrode plate 220 are located respectively on two sides of the electrode assembly 200 in the first direction X. Specifically, refer to FIG. 11 to FIG. 14. The figures sequentially show schematic diagrams of the first electrode plate 210, the first conductive member 300, and the second conductive member 400 in a connected state in two directions, and schematic diagrams of the second electrode plate 220, the third conductive member 500, and the fourth conductive member 600 in a connected state in two directions, according to some embodiments of this application. The third groove 2205 runs through the third active material layer 222 in the first direction X, and the fourth groove 2206 runs through the third active material layer 222 in the first direction X. Therefore, this helps one end of the third conductive member 500 away from the electrode assembly 200 to extend out of the second electrode plate 220. Certainly, any one of the first groove 2105, the second groove 2106, the fifth groove 2107, the sixth groove 2108, the seventh groove 2207, and the eighth groove 2208 may also run through the corresponding electrode plate in the first direction X as shown in FIG. 11 to FIG. 13. It should be noted that the fourth groove 2206 actually may also run through one end of the third active material layer 222 close to the first conductive member 300 only in one side in the first direction X. It is worth mentioning that even though in this embodiment, the third conductive member 500 is provided in the third groove 2205, but the application is not limited thereto. In other embodiments of this application, the third conductive member 500 may also be provided in the fourth groove 2206.

A positional relationship between the second conductive member 400 and the fourth conductive member 600 is basically the same as a positional relationship between the first conductive member 300 and the third conductive member 500, and is described in detail below.

Still refer to FIG. 10. The second conductive member 400 is mounted to a first connecting portion 214, and the fourth conductive member 600 is mounted to a second connecting portion 224. For ease of illustration, the first connecting portion 214, with the second conductive member 400 mounted, of the plurality of first connecting portions 214 is defined as a third preset connecting portion 214d, and the second connecting portion 224, with the fourth conductive member 600 mounted, of the plurality of second connecting portions 224 is defined as a fourth preset connecting portion 224d. A portion of the first active material layer 212 is located on the third preset connecting portion 214d. The portion of the first active material layer 212 located on the third preset connecting portion 214d is recessed away from the surface of the first current collector 211 to form a fifth groove 2107. In the first direction X, one end of the fifth groove 2107 runs through the first active material layer 212. A portion of the second active material layer 213 is located on the third preset connecting portion 214d. The portion of the second active material layer 213 located on the third preset connecting portion 214d is recessed away from the surface of the first current collector 211 to form a sixth groove 2108. In the first direction X, one end of the sixth groove 2108 runs through the second active material layer 213. One end of the second conductive member 400 is mounted to the sixth groove 2108, and the other end of the second conductive member 400 extends out of the first electrode plate 210 and is located on a same side of the electrode assembly 200 in the first direction X with one end of the first conductive member 300 extending out of the first electrode plate 210. Optionally, the second conductive member 400 is welded to the second current collector 221. Provision of the sixth groove 2108 helps exposure of the first current collector 211, so as to facilitate welding of the second conductive member 400, and in addition, the sixth groove 2108 may be further configured to receive a welding mark formed by a welding process. Similarly, the provision of the fifth groove 2107 also facilitates receiving a welding mark formed in welding the second conductive member 400.

In the third direction Z, the fourth preset connecting portion 224d is located on a side of the third preset connecting portion 214d with the fifth groove 2107; and, in the plurality of first connecting portions 214 and the plurality of second connecting portions 224, the fourth preset connecting portion 224d is disposed adjacently to the third preset connecting portion 214d, that is, the fourth preset connecting portion 224d is one of the many second connecting portions 224 that is adjacent to the third preset connecting portion 214d. A portion of the third active material layer 222 is located on the fourth preset connecting portion 224d. The portion of the third active material layer 222 located on the fourth preset connecting portion 224d is recessed away from the surface of the second current collector 221 to form a seventh groove 2207. In the first direction X, one end of the seventh groove 2207 runs through the third active material layer 222. Projections of the seventh groove 2207 and the second groove 2106 in the third direction Z at least partially overlap. A portion of the fourth active material layer 223 is located on the fourth preset connecting portion 224d. The portion of the fourth active material layer 223 located on the fourth preset connecting portion 224d is recessed away from the surface of the second current collector 221 to form an eighth groove 2208. In the first direction X, one end of the eighth groove 2208 runs through the fourth active material layer 223. Projections of the eighth groove 2208 and the seventh groove 2207 in the third direction Z at least partially overlap. One end of the fourth conductive member 600 is mounted to the eighth groove 2208, and the other end of the fourth conductive member 600 extends out of the second electrode plate 220 and is located on a same side of the electrode assembly 200 in the first direction X with one end of the third conductive member 500 extending out of the second electrode plate 220. Optionally, the fourth conductive member 600 is welded to the second current collector 221. Provision of the eighth groove 2208 helps exposure of the second current collector 221, so as to facilitate welding of the fourth conductive member 600, and in addition, the eighth groove 2208 may be further configured to receive a welding mark formed by a welding process. Similarly, the provision of the seventh groove 2207 also facilitates receiving a welding mark formed in welding the first conductive member 300.

Since in some cases the thickness of the fourth conductive member 600 may be greater than the thickness of the fourth active material layer 223, causing the fourth conductive member 600 (or welding burrs on the fourth conductive member 600) to protrude relative to the fourth active material layer 223. In addition, even though the thickness of the fourth conductive member 600 is not greater than the thickness of the fourth active material layer 223, in some use scenarios, the fourth preset connecting portion 224d is deformed so that the fourth conductive member 600 (or the welding burrs on the fourth conductive member 600) protrudes relative to the fourth active material layer 223, and this may result in the welding burrs piercing through the separator 230, causing short circuit between the first electrode plate 210 and the second electrode plate 220. To relieve this disadvantage, in this embodiment, the portion of the first active material layer 212 located on the third preset connecting portion 214d is provided on a side of the first current collector 211 facing the fourth conductive member 600 and is provided with the fifth groove 2107; and projections of the fifth groove 2107 and the fourth conductive member 600 in the third direction Z at least partially overlap. Such arrangement is intended to make the fourth conductive member 600 correspond to a position of the fifth groove 2107, thereby facilitating the fifth groove 2107 to accommodate a portion of the fourth conductive member 600 (or the welding burrs on the fourth conductive member 600) protruding relative to the surface of the fourth active material layer 223. In this embodiment, the projection of the fifth groove 2107 in the third direction Z covers the projection of the portion of the fourth conductive member 600 located on the fourth preset connecting portion 224d in the third direction Z. In this way, the fifth groove 2107 can completely accommodate the fourth conductive member 600 and a protruding portion of its welding burrs relative to the fourth active material layer 223. In some optional embodiments, at least part of the fourth conductive member 600 extends into the fifth groove 2107; and in some optional embodiments, a portion of the fourth conductive member 600 located on the fourth preset connecting portion 224d and protruding relative to the fourth active material layer 223 completely extends into the fifth groove 2107.

Further, to reduce the risk of the burrs formed by welding of the fourth conductive member 600 from piercing through the separator 230, the electrochemical apparatus 1 further includes a fifth insulator 270. Specifically, still refer to FIG. 10. The fifth insulator 270 is fixed to a side of the fourth preset connecting portion 224d provided with the fourth conductive member 600 and covers at least part of the eighth groove 2208, separating the fourth conductive member 600 from the separator 230 adjacent to the fifth insulator 270. Optionally, the fifth insulator 270 includes bonding adhesive. Certainly, in other embodiments of this application, the fifth insulator 270 may also include any other insulating element as long as the insulating element can separate the fourth conductive member 600 from the separator 230. To further reduce the risk of the burrs formed by welding of the fourth conductive member 600 from piercing through the separator 230, the electrochemical apparatus 1 further includes a sixth insulator 280. Specifically, still refer to FIG. 10. The sixth insulator 280 is fixed to a side of the fourth preset connecting portion 224d provided with the third active material layer 222 and covers at least part of the seventh groove 2207, separating the welding burrs in the seventh groove 2207 from the adjacent separator 230. Optionally, the sixth insulator 280 includes bonding adhesive. Similarly, in other embodiments of this application, the sixth insulator 280 may also include any other insulating element.

Further, to reduce the risk of the burrs formed by welding of the second conductive member 400 from piercing through the separator 230, the electrochemical apparatus 1 further includes a seventh insulator 290. Specifically, still refer to FIG. 10. The seventh insulator 290 is fixed to a side of the third preset connecting portion 214d provided with the second conductive member 400 and covers at least part of the sixth groove 2108, separating the second conductive member 400 from the separator 230 adjacent to the seventh insulator 290. Optionally, the seventh insulator 290 includes bonding adhesive. Certainly, in other embodiments of this application, the seventh insulator 290 may also include any other insulating element as long as the insulating element can separate the second conductive member 400 from the separator 230. To further reduce the risk of the burrs formed by welding of the second conductive member 400 from piercing through the separator 230, the electrochemical apparatus 1 further includes an eighth insulator. Specifically, the eighth insulator is fixed to a side of the third preset connecting portion 214d provided with the first active material layer 212 and covers at least part of the fifth groove 2107, separating the welding burrs in the fifth groove 2107 from the adjacent separator 230. Optionally, the eighth insulator includes bonding adhesive. Similarly, in other embodiments of this application, the eighth insulator may also include any other insulating element.

It is worth mentioning that, since the provision of the fifth groove 2107 can be used to accommodate the portion of the fourth conductive member 600 located on the third preset connecting portion 214d, that is, the fifth groove 2107 corresponds to the position of the fifth insulator 270, the eighth insulator in this embodiment of this application can actually be omitted. That is, the provision of the fourth groove 2206 corresponding to the position of the fourth conductive member 600 helps to save a layer of the bonding adhesive and then helps to decrease the thickness of the electrode assembly 200, so as to improve the energy density of the electrochemical apparatus 1.

It is worth mentioning that even though in this embodiment, the second conductive member 400 is provided in the sixth groove 2108, but the application is not limited thereto. In other embodiments of this application, the second conductive member 400 may also be provided in the fourth groove 2206, and the position of the first conductive member 300 is adjusted accordingly.

In some embodiments, among the plurality of first connecting portions 214 and the plurality of second connecting portions 224, the first preset connecting portion 214c, the second preset connecting portion 224c, the third preset connecting portion 214d, and the fourth preset connecting portion 224d are disposed adjacently. In the third direction Z, the first preset connecting portion 214c is adjacent to the third preset connecting portion 214d, the fourth preset connecting portion 224d is adjacent to the first preset connecting portion 214c, and the second preset connecting portion 224c is adjacent to the fourth preset connecting portion 224d.

If the sixth groove 280 has a smaller width in the second direction Y than the second insulator 250, when the electrochemical apparatus 1 is charged, lithium ions in the active material located at the edge of the sixth groove 280 and opposite to the position of the second insulator 250 will still deintercalate from the second electrode plate 220 and move to the first electrode plate 210. Because a portion of the active material of the first electrode plate 210 is covered by the second insulator 250, some lithium ions deintercalated from the second electrode plate 220 cannot be intercalated in the first electrode plate 210, and are precipitated in an elemental form on the surface of the first electrode plate 210, causing lithium precipitation. This may in turn cause some active materials in the first electrode plate 210 to fail to deintercalate from the first electrode plate 210 during discharging. In this embodiment, in the second direction Y, two ends of the second insulator 250 are located between two ends of the sixth groove 280, and in this way, the foregoing disadvantage can be relieved to some extent.

The electrochemical apparatus 1 provided in this embodiment of this application includes a housing 100, a wound electrode assembly 200 accommodated in the housing 100, a first conductive member 300, and a second conductive member 400. In the electrode assembly 200, the first current collector 211 of the first electrode plate 210 includes a first conductive layer 2112, a first insulation layer 2111, and a second conductive layer 2113 that are stacked. The first insulation layer 2111 is located between the first conductive layer 2112 and the second conductive layer 2113. The first conductive member 300 is connected to the first conductive layer 2112, and the second conductive member 400 is connected to the second conductive layer 2113, where the first conductive member 300 is electrically connected to the second conductive member 400.

If the two conductive layers of a composite current collector are not connected, internal resistance of the composite current collector is large, and the electrode plate has a low current flow capacity. To relieve this disadvantage, in some embodiments, a tab is fixed to the composite current collector by using ultrasonic welding or the like, and high temperature generated by welding causes an insulating material layer in the middle of the composite current collector to partially melt at a corresponding position, and makes two conductive material layers to be forcibly contacted and connected. However, this has high uncertainty, because even though the insulating material layer melts, there is a probability that the two conductive material layers are not in electrical contact. When there is no electrical contact or poor contact between the two conductive material layers, it is difficult for electrons in one of a conductive material layer on a side away from the tab and the tab to flow to the other, thereby making the electrode plate have a low current flow capacity.

While in the electrochemical apparatus 1 provided in this embodiment of this application, the first conductive member 300 is connected to the first conductive layer 2112, the second conductive member 400 is connected to the second conductive layer 2113, and the first conductive member 300 and the second conductive member 400 are electrically connected to each other. Therefore, electronic conduction is achieved between the first conductive layer 2112 and the second conductive layer 2113 through the first conductive member 300 and the second conductive member 400. In other words, the electrochemical apparatus provided in this embodiment of this application can relieve the current situation of non-conduction between two conductive layers in current composite current collectors. On this basis, whether an additional tab is provided on the first current collector 211 or at least one of the first conductive member 300 and the second conductive member 400 is used as the tab of the electrochemical apparatus 1, electrons in the first conductive layer 2112 and the second conductive layer 2113 can flow to the tab, or electrons in the tab can flow to the first conductive layer 2112 and the second conductive layer 2113.

In addition, the electrochemical apparatus 1 satisfies: L₁₂/L₁₁ ≥ 1/5. This setting can allow a relatively large distance between the first conductive member 300 and the second conductive member 400, so as to avoid the two being located on a same first connecting portion 214 and close to each other. In other words, the first conductive member 300 and the second conductive member 400 can be located on different first connecting portions 214, or at two ends of a same first connecting portion 214, so as to reduce the foregoing risk of lithium precipitation. In addition, the current density at the position of the first conductive member 300/second conductive member 400 is relatively high, prone to cause expansion and contraction of the first active material layer 212/second active material layer 213, thereby causing deformation of the first conductive layer 2112, the second conductive layer 2113, and the first insulation layer 2111. If the first conductive member 300 is too close to the second conductive member 400, length deformation of the entire first electrode plate 210 is too concentrated during charging and discharging, then causing concentration of stress on the first electrode plate 210 and thereby causing the electrode plate 210 to be prone to deformation. This can affect electrochemical performance and service life. Setting of L₁₂/L₁₁ ≥ 1/5 can relieve the foregoing situation to some extent.

In addition, the electrochemical apparatus 1 satisfies: 1/5 ≤ (L₁₆ - L₁₄)/(L₁₁ - L₁₄ - L₁₅) ≤ 2/5, and/or 1/5 ≤ (L₁₇ - L₁₅)/(L₁₁ - L₁₄ - L₁₅) ≤ 2/5. This setting can make the first conductive member 300 and the second conductive member 400 respectively close to three equal points of a first area layer along an extending direction of a second side 2102. This can reduce the risk of lithium precipitation at the position of the first electrode plate 210 at which the first conductive member 300 and the second conductive member 400 are disposed. This setting can also ensure that an intercalation or deintercalation rate of lithium ions in a portion of the first area layer (or second area layer) located between a first edge and the first conductive member 300, a portion of the first area layer (or second area layer) between the first conductive member 300 and the second conductive member 400, and a portion of the first area layer (or the second area layer) located between a second edge and the second conductive member 400, that is, a moving speed is more uniform.

It is worth mentioning that even though the first conductive member 300, the second conductive member 400, the third conductive member 500, and the fourth conductive member 600 are arranged as above in this embodiment, this application is not limited thereto, and the arrangement of the foregoing four members is actually flexible and variable.

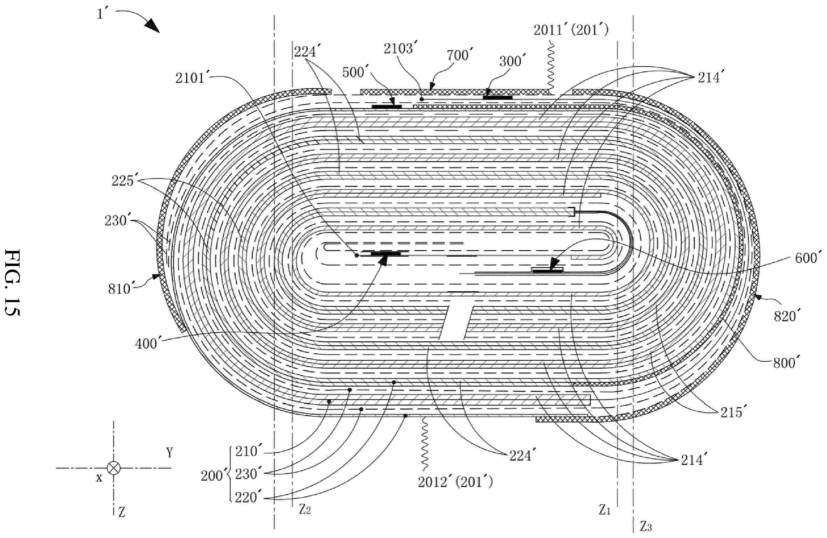

For example, FIG. 15 is a schematic cross-sectional diagram of an electrochemical apparatus 1' with a housing hidden according to another embodiment of this application (a viewing angle can refer to the viewing angle in FIG. 3). The electrochemical apparatus 1' still includes a housing, an electrode assembly 200', a first conductive member 300', a second conductive member 400', a third conductive member 500', and a fourth conductive member 600'. In addition, the electrochemical apparatus 1' further includes a bonding member 700'. One of the differences between the electrochemical apparatus 1' and the electrochemical apparatus 1 in the foregoing embodiment is as follows.

In the electrochemical apparatus 1, the first conductive member 300 is disposed close to a three-equal-point of the first area layer along an extending direction of the second side, and the first electrode plate 210 is provided with insulators on two sides of a position at which the first conductive member 300 is disposed.

While in the electrochemical apparatus 1', the first conductive member 300' is disposed close to a third side 2103', and in the third direction Z, a first electrode plate 210' is provided with a corresponding bonding member 700' only on one side of the position at which the first conductive member 300' is disposed.

Specifically, the third side 2103' of the first electrode plate 210' is located at a first connecting portion 214', that is, the first electrode plate 210' ends with the first connecting portion 214'; and in the third direction Z, the first connecting portion 214' having the third side 2103' is outward of the plurality of second connecting portions 224'. As shown in FIG. 15, the first connecting portion 214' having the third side 2103' is the uppermost first connecting portion 214' in the figure. A seventh side 2203' of s second electrode plate 220' is located at a second connecting portion 224', that is, the second electrode plate 220' ends with the second connection portion 224'; and in the third direction Z, the second connecting portion 224' having the seventh side 2203' is located at the outermost side of each first connecting portion 214'. As shown in FIG. 15, the second connecting portion 224' having the seventh side is the lowermost second connecting portion 224' in the figure.

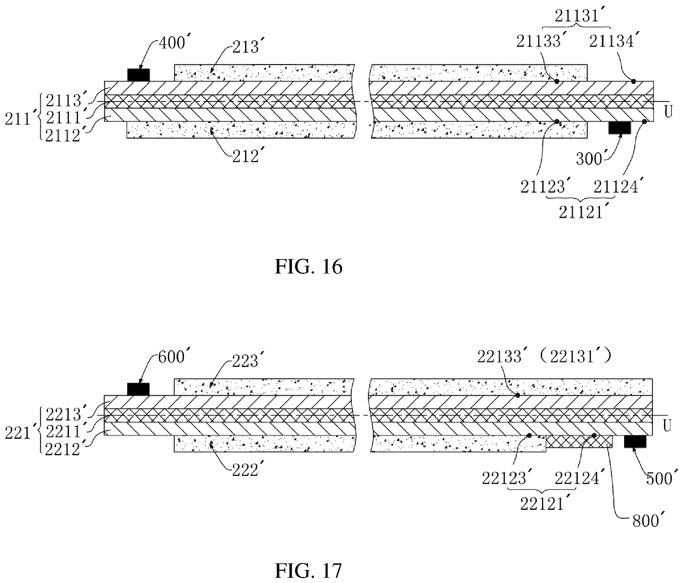

For the first electrode plate 210', refer to FIG. 16. FIG. 16 is a schematic diagram of the first electrode plate 210' in an unfolded state. The first electrode plate 210' includes a first current collector 211', a first active material layer 212', and a second active material layer 213'. A first surface 21121' of the first current collector 211' has a first area 21123' provided with a first active material layer 212' and a second area 21124' not provided with the first active material layer 212'; and a second surface 21131' has a third area 21133' provided with a second active material layer 213' and a fourth area 21134' not provided with the second active material layer 213'. In fourth direction U, the second area 21124' extends from a third side toward a first side; and the second area 21124' has a first head end located at the third side and a first tail end closer to the first side than the first head end. The first head end and the first tail end are two opposite ends of the second area 21124' in fourth direction U. Similarly, in fourth direction U, the fourth area 21134" extends from the third side toward the first side; and the fourth area 21134' has a second head end located at the third side and a second tail end closer to the first side than the second head end. The second head end and the second tail end are two opposite ends of the fourth area 21134' in fourth direction U. In the third direction Z, in a same first bending portion 215', the first surface 21121' is a surface of the first current collector 211' away from the first side, and the second surface 21131' is a surface of the first current collector 211' close to the first side.

For the second electrode plate 220', refer to FIG. 17. FIG. 17 is a schematic diagram of the second electrode plate 220' in an unfolded state. The second electrode plate 220' includes a second current collector 221', a third active material layer 222', and a fourth active material layer 223'. A third surface 22121' of the second current collector 221' has a fifth area 22123' provided with a third active material layer 222' and a sixth area 22124' not provided with the third active material layer 222'; and a fourth surface 22131' has a seventh area 22133" provided with a fourth active material layer 223'. In fourth direction U, the sixth area 22124' extends from a seventh side toward a fifth side; and the sixth area 22124' has a third head end located at the seventh side and a third tail end closer to the fifth side than the third head end. The third head end and the third tail end are two opposite ends of the sixth area 22124' in fourth direction U. Refer to FIG. 15. In the third direction Z, the third tail end is located on a side of the second tail end close to the first side 2101'. In the third direction Z, in a same second bending portion 225', the third surface 22121' is a surface of the second current collector 221' away from the first side, and the fourth surface 22131' is a surface of the second current collector 221' close to the first side 2101'.

The fourth area 21134' is disposed opposite the sixth area 22124'. In this embodiment, to reduce a risk of short circuit between the first electrode plate 210' and the second electrode plate 220' caused by contact between the fourth area 21134' and the sixth area 22124', the electrochemical apparatus 1' further includes a first insulation adhesive 800'. Specifically, still refer to FIG. 15 and FIG. 17. The first insulation adhesive 800' is fixed to the sixth area 22124' and is strip-shaped as a whole. One end of the first insulation adhesive 800' is disposed close to the third tail end, and the other end of the first insulation adhesive 800' extends toward the third head end; and the first insulation adhesive 800' separates an exposed part of the second current collector 221' from an exposed part of the first current collector 211', so that the risk of contact between the fourth area 21134' and the sixth area 22124' can be reduced. Optionally, the first insulation adhesive 800' includes single-sided adhesive and is bonded and fixed to the second current collector. Certainly, in some other embodiments of this application, the first insulation adhesive 800' may also include double-sided adhesive, and in this case, the first insulation adhesive 800' is bonded to both the second current collector and an adjacent separator 230'.

For two separators 230' described above, still refer to FIG. 15, one end of each separator 230' is located at the winding center of the electrode assembly 200' and is disposed close to the first side 2101'; and the other end of each separator 230' is located on an outer surface of the electrode assembly 200' and is specifically laminated on the second bending portion 225'. In the winding direction of the electrode assembly 200', the third side 2103', one end of the separator 230' away from the first side 2101', and the seventh side are disposed in sequence. To maintain the electrode assembly 200' in a wound state, the electrochemical apparatus 1' further includes a second insulation adhesive 810' and the third insulation adhesive 820'. Specifically, one end of the second insulation adhesive 810' is fixed to a portion of an outermost-layer separator 230' laminated on the outermost second bending portion 225', and the other end of the second insulation adhesive 810' is fixed to the second bending portion 225' laminated with the separator 230'. In the winding direction of the electrode assembly 200', the third side 2103 ', the second insulation adhesive 810'and the seventh side are disposed in sequence. One end of the third insulation adhesive 820' is fixed to the second connecting portion 224' having the seventh edge, and the other end of the third insulation adhesive 820' is fixed to a portion of an outermost separator 230' laminated on the outermost first bending portion 215'. In the winding direction of the electrode assembly 200, the second insulation adhesive 810', the third insulation adhesive 820', and the third side 2103' are disposed in sequence. The first bending portion 215' laminated with the first insulation adhesive 800'and the third insulation adhesive 820' and the second bending portion 225' laminated with the second insulation adhesive 810'are respectively located on two sides of a first reference line Zi.

One end of the first conductive member 300' is fixed to a first connecting portion 214' having the third side; and in the third direction Z, the first conductive member 300' is located at a side of the connected first connecting portion 214' away from the first side.

The electrode assembly 200' has an outer surface 201'. The outer surface 201' is disposed around the first side and includes a fifth surface 2011' and a sixth surface 2012' oppositely disposed in the third direction Z. In the third direction Z, the fifth surface 2011' is closer to the first conductive member 300' than the sixth surface 2012'. As shown in the figure, the fifth surface 2011' is a surface of the outermost separator 230' away from the first side, and the sixth surface 2012' is a side of the outermost second connecting portion 224' away from the first side. The bonding member 700' is bonded to the fifth surface 2011', and is also fixed to the housing, so that the electrode assembly 200' is fixedly connected to the housing. Projections of the bonding member 700' and the first conductive member 300' in the third direction Z at least partially overlap. Therefore, the bonding member 700' can separate the first conductive member 300' from the housing in addition to fixing the electrode assembly 200', so as to prevent the welding burrs of the first conductive member 300' from piercing through the housing. In this embodiment, in the third direction Z, the projection of the bonding member 700' covers the projection of the portion of the first conductive member 300' located on the first electrode plate 210'. In this way, the bonding member 700' can basically separate the welding burrs of the first conductive member 300' from the housing. Optionally, the bonding member 700' includes double-sided adhesive. Certainly, in other embodiments of this application, the bonding member 700' may also be another element with bonding performance such as hot melt adhesive. In addition, to prevent the first conductive member 300' from piercing through the separator between the first conductive member 300' and its adjacent second connecting portion 224', thereby causing short circuit between the first electrode plate 210' and the second electrode plate 220', the electrochemical apparatus 1' still includes a second insulator. The second insulator is provided on a side of the first connecting portion 214' facing the first side in the third direction Z and covers burrs formed by welding of the first conductive member 300'.

In some embodiments, in the third direction Z, the third conductive member 500' is fixed to a second connecting portion 224' adjacent to the first conductive member 300'. Specifically, in the third direction Z, the third conductive member 500' is located on a side of the connected second connecting portion 224' away from the first side; and in the second direction Y, the third side is located between the first conductive member 300' and the second conductive member 400'. Projections of the bonding member 700' and the third conductive member 500' in the third direction Z at least partially overlap. The bonding member 700' also can separate the third conductive member 500' from the housing, so as to prevent the welding burrs of the third conductive member 500' from piercing through the housing. In this embodiment, in the third direction Z. the projection of the bonding member 700' covers the projection of the portion of the third conductive member 500' located on the second electrode plate 220'. In this way, the bonding member 700' can basically separate the welding burrs of the third conductive member 500' from the housing. In addition, to prevent the third conductive member 500' from piercing through the separator on a side of the third conductive member 500' facing the first side, thereby causing short circuit between the first electrode plate 210' and the second electrode plate 220', the electrochemical apparatus 1' still includes a fourth insulator. The fourth insulator is provided on a side of the second connecting portion 224' facing the first side in the third direction Z and covers burrs formed by welding of the third conductive member 500'.

It is worth mentioning that in this embodiment in a wound state of the electrode assembly 200', the outermost separator 230' is outward of the tail of the first electrode plate 210', the tail of the separator 230' is fixed by the second insulation adhesive 810', and the tail of the second electrode plate 220' is fixed by the third insulation adhesive 820'. In this way, the electrode assembly 200' can be stably maintained in the wound state. Such arrangement can prevent a situation in which the tail of the second electrode plate 220' ends with an empty foil area around the tail end of the first electrode plate 210' and is conducive to saving material costs of the electrode assembly 200' and reducing overall weight of the electrode assembly 200'. These are all beneficial to improve the energy density of the electrode assembly 200'. In addition, the bonding member 700' is fixed on the separator 230' and the separator 230' is elastic. Therefore, when the electrochemical apparatus 1' falls or is impacted, the bonding member 700' is not likely to tear the separator 230', that is, not likely to damage the electrode assembly 200', and the bonding member 700' can also absorb part of the impact force to provide cushioning for the first electrode plate 210' and the second electrode plate 220'. On the contrary, if the bonding member 700' is fixed to the first electrode plate 210' or the second electrode plate 220', it is difficult to achieve the above effect.

As compared with the electrochemical apparatus 1 in the foregoing embodiment, in the electrochemical apparatus 1' provided in this embodiment, the first conductive member 300' is provided on a first connecting portion 214' having a third side and separation of the first conductive member 300' from the housing is achieved by the bonding member 700'. In this way, a layer of bonding adhesive, that is, the first insulation adhesive, can be reduced, and this is conducive to reducing thickness of the electrode assembly 200' in the third direction Z and then is beneficial to improve the energy density of the electrochemical apparatus 1'.

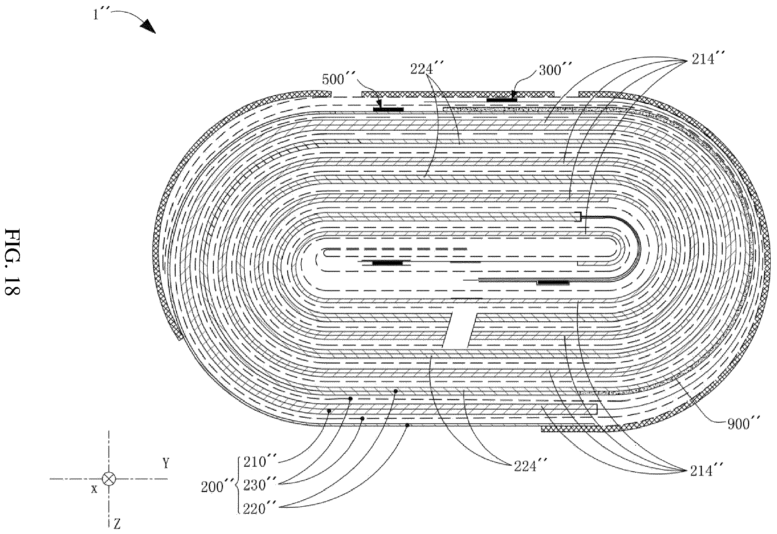

For another example, FIG. 18 is a schematic cross-sectional diagram of an electrochemical apparatus 1" with a housing hidden according to still another embodiment of this application (a viewing angle can still refer to the viewing angle in FIG. 3). The electrochemical apparatus 1' 'still includes a housing, an electrode assembly 200", a first conductive member 300", a second conductive member 400", a third conductive member 500", and a fourth conductive member 600". A main difference between the electrochemical apparatus 1" and the electrochemical apparatus 1' in the foregoing embodiment is as follows.

The electrochemical apparatus 1' includes a first insulation adhesive 800', and the electrochemical apparatus 1' separates the fourth area 21134' from the sixth area 22124' by the first insulation adhesive 800'.

The electrochemical apparatus 1" does not include a first insulation adhesive 800', but includes an insulation coating layer 900". Specifically, the insulation coating layer 900" is disposed on the sixth area to separate the fourth area from the sixth area. In this embodiment, the insulation coating layer 900" extends from the third tail end to the third head end. Certainly, in other embodiments of this application, there may alternatively be a distance between the insulation coating layer 900" and the third head end as long as the insulation coating layer 900" covers the portion of the sixth area corresponding to the fourth area. Optionally, the insulation coating layer 900" includes a ceramic material. Certainly, in other embodiments of this application, the insulation coating layer 900" can also be a material layer made of other materials. As for a method of disposing the insulating material layer on the sixth area, the method may be coating, spraying, vapor deposition, or the like, which is not limited in this application.

Compared with the electrochemical apparatus 1' in the foregoing embodiment, the electrochemical apparatus 1" provided in this embodiment uses an insulation coating layer 900" instead of the first insulation adhesive 800'. Since the first insulation adhesive 800' is fixed to the third area by bonding, effectiveness of bonding is likely to be affected when the first insulation adhesive 800' has been soaked in the electrolyte for a long time. In contrast, the connection strength between the insulation coating layer 900" and the second current collector is more reliable. When being disposed on a morphology of the third surface, the insulation coating layer can be made more structured than the first insulation adhesive 800', and is not prone to causing local deformation of the electrode assembly 200. In addition, even though the insulation coating layer has been soaked in the electrolyte for a long time, the connection strength between the insulation coating layer and the second current collector is not easily affected.

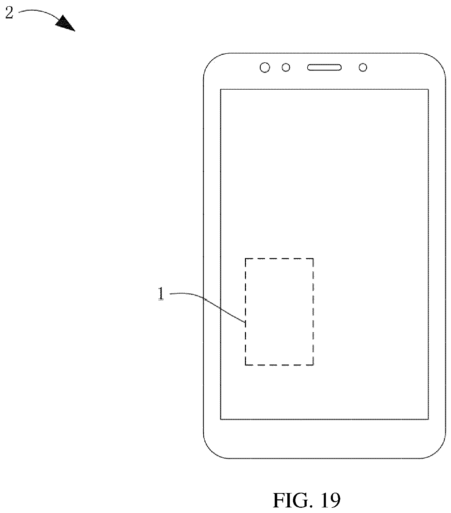

Based on the same invention concept, another embodiment of this application further provides an electronic device. Specifically, refer to FIG. 19. FIG. 19 is a schematic diagram of an electronic device 2, and with reference to FIG. 1 to FIG. 14, the electronic device 2 includes the electrochemical apparatus 1 (1', 1") in any of the foregoing embodiments. In this embodiment, the electronic device is a mobile phone. It can be understood that in other embodiments of this application, the electronic device may alternatively be any other electronic device such as a tablet, a computer, a drone, a remote control, or an electric vehicle.

The electronic device 2 includes the foregoing electrochemical apparatus, so the electronic device 2 can also relieve the current situation that existing battery electrode plates using composite current collectors have a low current flow capacity.

Finally, it should be noted that the foregoing embodiments are merely intended to describe the technical solutions of this application, but not intended to constitute any limitation. Under the idea of this application, the foregoing embodiments or technical features in different embodiments can also be combined, steps can be implemented in any order, and there are many other changes in different aspects of the application as described above, which, for the sake of brevity, are not provided in the detail. Although this application is described in detail with reference to the foregoing embodiments, persons of ordinary skill in the art should understand that modifications can be made to the technical solutions of the foregoing embodiments or equivalent replacements can be made to some technical features therein, and these modifications or replacements do not make an essence of the corresponding technical solutions depart from the scope of the technical solutions of the embodiments of this application.

## Claims

1. An electrochemical apparatus (1), **characterized in that**, the electrochemical apparatus (1) comprises a housing (100) and an electrode assembly (200) accommodated in the housing (100);
the electrode assembly (200) comprising a first electrode plate (210), a second electrode plate (220), and a separator (230) disposed between the first electrode plate (210) and the second electrode plate (220);
wherein the first electrode plate (210) comprises a first current collector (211), a first active material layer (212), and a second active material layer (213);
the first current collector (211) comprises a first conductive layer (2112), a first insulation layer (2111), and a second conductive layer (2113); the first conductive layer (2112), the first insulation layer (2111), and the second conductive layer (2113) are stacked;
wherein the first insulation layer (2111) is disposed between the first conductive layer (2112) and the second conductive layer (2113), the first conductive layer (2112) has a first surface (21121) facing away from the first insulation layer (2111), and the second conductive layer (2113) has a second surface (21131) facing away from the first insulation layer (2111);
the first current collector (211) comprises at the periphery a first side (2101) extending along a first direction and a second side (2102) adjoining the first side (2101), wherein the second side (2102) has a greater length than the first side (2101), the first active material layer (212) is disposed on the first surface (21121), and the second active material layer (213) is disposed on the second surface (21131); and
the electrochemical apparatus (1) further comprises a first conductive member (300), connected to the first conductive layer (2112) and a second conductive member (400), connected to the second conductive layer (2113), wherein the second conductive member (400) is electrically connected to the first conductive member (300); and
in an extending direction of the second side (2102), the second side (2102) has a length L₁₁, and the first conductive member (300) is spaced apart from the second conductive member (400) by a distance L₁₂, wherein L₁₂/L₁₁ ≥ 1/5.

2. The electrochemical apparatus (1) according to claim 1, **characterized in that**, the first current collector (211) further comprises at the periphery a third side (2103) opposite to the first side (2101);
the first active material layer (212) has a first edge (2121) and a second edge (2122), wherein the first edge (2121) and the second edge (2122) are located at the first current collector (211), and the second active material layer (213) has a third edge (2131) and a fourth edge (2132), wherein the third edge (2131) and the fourth edge (2132) are located at the first current collector (211);
in the extending direction of the second side (2102), the first edge (2121) and the second edge (2122) are located at two ends of the first active material layer (212) respectively, the first edge (2121) is closer to the first side (2101) than the second edge (2122), the first edge (2121) is at a first distance from the first side (2101), and the second edge (2122) is at a second distance from the third side (2103);
in the extending direction of the second side (2102), the third edge (2131) and the fourth edge (2132) are located at two ends of the second active material layer (213) respectively, the third edge (2131) is closer to the first side (2101) than the fourth edge (2132), the third edge (2131) is at a third distance from the first side (2101), the fourth edge (2132) is at a fourth distance from the third side (2103), a larger value of the first distance and the third distance is L₁₄, and a larger value of the second distance and the fourth distance is L₁₅; and
in the extending direction of the second side (2102), the first conductive member (300) is closer to the first side (2101) than the second conductive member (400), the first conductive member (300) is at a distance L₁₆ from the first side (2101), and the second conductive member (400) is at a distance L₁₇ from the third side (2103); wherein
1/5 ≤ (L₁₆ - L₁₄)/(L₁₁ - L₁₄ - L₁₅) ≤ 2/5 and/or 1/5 ≤ (L₁₇ - L₁₅)/(L₁₁ - L₁₄ - L₁₅) ≤ 2/5.

3. The electrochemical apparatus (1) according to claims 2, **characterized in that**, the second electrode plate (220) comprises a second current collector (221), a third active material layer (222), and a fourth active material layer (223);
the second current collector (221) comprises a third conductive layer (2212), a second insulation layer (2211), and a fourth conductive layer (2213) ;the third conductive layer (2212), the second insulation layer(2211), and the fourth conductive layer(2213) are stacked,
wherein the second insulation layer (2211) is disposed between the third conductive layer (2212) and the fourth conductive layer (2213), the third active material layer (222) is disposed on a surface of the third conductive layer (2212) facing away from the second insulation layer (2211), and the fourth active material layer (223) is disposed on a surface of the fourth conductive layer (2213) facing away from the second insulation layer (2211); and
the electrochemical apparatus (1) further comprises a third conductive member (500) and a fourth conductive member (600), wherein the third conductive member (500) is connected to the third conductive layer (2212), and the fourth conductive member (600) is connected to the fourth conductive layer (2213).

4. The electrochemical apparatus (1) according to claim 3, **characterized in that**, the first electrode plate (210) is wound with respect to the first side (2101) and comprises a plurality of first connecting portions (214) and a plurality of first bending portion (215);
the first connecting portions (214), as viewed from the first direction, extend along a second direction and are arranged along a third direction, and the first bending portion connects two neighboring first connecting portions (214) in a winding direction of the electrode assembly (200),
wherein the first direction, the second direction, and the third direction are perpendicular to each other; and
the second current collector (221) comprises at the periphery a fifth side extending along the first direction and a sixth side adjoining the fifth side, wherein the sixth side has a greater length than the fifth side, the second electrode plate (220) is wound with respect to the fifth side and comprises a plurality of second connecting portion (224) and a plurality of second bending portion (225),
the second connecting portion (224), as viewed from the first direction, extend along the second direction and are arranged along the third direction, and the second bending portion (225) connects two neighboring second connecting portion (224) in the winding direction.

5. The electrochemical apparatus (1) according to claim 4, **characterized in that**, one of the plurality of first connecting portions (214) is defined as a first preset connecting portion, and one end of the first conductive member (300) is mounted to the first preset connecting portion;
one of the plurality of second connecting portion (224) is defined as a second preset connecting portion, in the third direction, the second preset connecting portion is provided at a side of the first conductive member (300) facing away from the first preset connecting portion, and among the plurality of first connecting portions (214) and the plurality of second connecting portion (224), the second preset connecting portion is adjacent to the first preset connecting portion; and
the fourth active material layer (223) is provided with a fourth groove at a portion located at the second preset connecting portion, the portion being arranged at a side of the second current collector (221) facing away from the first conductive member (300), wherein the fourth groove runs through a surface of the fourth active material layer (223) facing away from the second current collector (221), and projections of the fourth groove and the first conductive member (300) in the third direction at least partially overlap.

6. The electrochemical apparatus (1) according to claim 5, **characterized in that**, the third active material layer (222) is provided with a third groove at a portion located at the second preset connecting portion, wherein the third groove runs through a surface of the third active material layer (222) facing away from the second current collector (221), and projections of the third groove and the fourth groove in the third direction at least partially overlap;
in an extending direction of the first side (2101), one end of the third conductive member (500) is mounted to the third groove and the other end thereof extends out of the second electrode plate (220); and
an end of the first conductive member (300) extending out of the first electrode plate (210) and the end of the third conductive member (500) extending out of the second electrode plate (220) are located on two sides of the electrode assembly (200) in the first direction respectively.

7. The electrochemical apparatus (1) according to claim 6, **characterized in that**, the fourth groove runs through the fourth active material layer (223) in the first direction; and/or
the third groove runs through the third active material layer (222) in the first direction.

8. The electrochemical apparatus (1) according to claim 5, **characterized in that**, the electrochemical apparatus(1) further comprising a first insulator (240),
the first insulator (240) is fastened to a side of the first preset connecting portion provided with the first conductive member (300), separating the first conductive member (300) from the separator (230) adjacent to the first insulator (240).

9. The electrochemical apparatus (1) according to claim 8, **characterized in that**, two ends of the first insulator (240) are located between two ends of the fourth groove in the second direction.

10. The electrochemical apparatus (1) according to claim 5, **characterized in that**, one of the plurality of first connecting one of the plurality of second connecting portions is defined as a fourth preset connecting portion, and one end of the fourth conductive member is mounted to the fourth preset connecting portion; and g portions (214) is defined as a third preset connecting portion, and one end of the second conductive member (400) is mounted to the thrid preset connecting portion;
one of the plurality of second connecting portion (224) is defined as a fourth preset connecting portion, and one end of the fourth conductive member (600) is mounted to the fourth preset connecting portion; and
among the plurality of first connecting portions and the plurality of second connecting portion (224), the first preset connecting portion is adjacent to the third preset connecting portion, the fourth preset connecting portion is adjacent to the first preset connecting portion, and the second preset connecting portion is adjacent to the fourth preset connecting portion.

11. The electrochemical apparatus (1) according to claim 10, **characterized in that**,
the first active material layer (212) is provided with a first groove (2105) at a portion located at the first preset connecting portion, and one end of the first conductive member (300) is mounted to the first groove (2105);
the second active material layer (213) is provided with a second groove (2106) at a portion located at the first preset connecting portion, and projections of the second groove (2106) and the first groove (2105) in the third direction at least partially overlap;
the third active material layer (222) is provided with a seventh groove at a portion located at the fourth preset connecting portion, and projections of the seventh groove and the second groove (2106) in the third direction at least partially overlap;
the fourth active material layer (223) is provided with an eighth groove at a portion located at the fourth preset connecting portion, and projections of the eighth groove and the seventh groove in the third direction at least partially overlap;
the electrochemical apparatus (1) further comprises a second insulator (250) and a sixth insulator (280), wherein the second insulator (250) is fastened to a side of the first preset connecting portion provided with the second groove (2106) and covers at least a part of the second groove (2106), and the sixth insulator (280) is fastened to a side of the fourth preset connecting portion provided with the seventh groove and covers at least a part of the seventh groove; and
two ends of the second insulator (250) are located between two ends of the sixth insulator (280) in the second direction.

12. The electrochemical apparatus (1) according to claim 4 **characterized in that**, the third side (2103) is located at the first connecting portion, the first connecting portion having the third side (2103) is outward of the plurality of second connecting portion (224) in the third direction, one end of the first conductive member (300) is fastened to the first connecting portion having the third side (2103), and in the third direction, the first conductive member (300) is disposed at a side of the connected first connecting portion facing away from the first side (2101);
the electrode assembly comprises a fifth surface (2011) and a sixth surface (2012) spaced apart in the third direction, wherein the fifth surface (2011) is closer to the first conductive member (300) than the sixth surface (2012) in the third direction; and
the electrochemical apparatus (1) further comprises a bonding member, wherein the bonding member is bonded to the fifth surface (2011) and secured to the housing (100), and projections of the bonding member and the first conductive member (300) in the third direction at least partially overlap.

13. The electrochemical apparatus (1) according to claim 12, **characterized in that**, the third conductive member (500) is fastened to the second connecting portion (224) adjacent to the first conductive member (300) in the third direction and is located, in the third direction, at a side of the connected second connecting portion (224) facing away from the first side (2101);
the third side (2103) is located between the first conductive member (300) and the second conductive member (400) in the second direction; and
projections of the bonding member and the third conductive member (500) in the third direction at least partially overlap.

14. The electrochemical apparatus (1) according to claim 4, **characterized in that**, a surface of the second conductive layer (2113) is provided with a third area with the second active material layer (213) disposed and a fourth area without the second active material layer (213),
wherein the fourth area comprises a second head end and a second tail end provided opposite to each other in the winding direction, and the second head end is located at the third side (2103);
the second current collector (221) comprises at the periphery a seventh side provided opposite to the fifth side, and
a surface of the third conductive layer (2212) is provided with a fifth area with the third active material layer (222) disposed and a sixth area without the third active material layer (222),
wherein the sixth area comprises a third head end and a third tail end provided opposite each other in the winding direction, the third head end is located at the seventh side, and in the third direction, the third tail end is located at a side of the second tail end closer to the first side (2101); and
the electrochemical apparatus (1) further comprises an insulating material layer disposed in the sixth area.

15. An electronic device (2), comprising the electrochemical apparatus (1) according to any one of claims 1 to 14.
